# EUROPÄISCHE PATENTANMELDUNG

(11) **EP 4 792 702 A1**
(43) Veröffentlichungstag der Anmeldung: **19.08.2026**
(21) Anmeldenummer: 25157653.4
(22) Anmeldetag: 13.02.2025
(51) Int. Cl.: A47J 43/07, A47J 43/08, B01F 35/212, B01F 35/33

(54) **KÜCHENMASCHINE UND VERFAHREN ZUM BETREIBEN EINER KÜCHENMASCHINE**

(71) Anmelder: Vorwerk & Co. Interholding GmbH, 42275 Wuppertal (DE)
(72) Erfinder: SEIBT, Patrick, 40789 Monheim am Rhein (DE); ARNDT, Simon, 42929 Wermelskirchen (DE); KEIL, Sabine, 42119 Wuppertal (DE)
(74) Vertreter: Von Rohr Patentanwälte Partnerschaft mbB

(57) **Zusammenfassung**

Es wird ein Verfahren zum Betreiben einer Küchenmaschine mit einem drehbaren Werkzeug vorgeschlagen, bei dem eine Blockade des Werkzeugs in einem Gefäß der Küchenmaschine behandelt oder gelöst wird. Hierzu wird ein mit dem Werkzeug gekoppelter Elektromotor basierend auf von einem Drehwinkelsensor erfassten Messwerten und einem oder mehreren vorgegebenen Motorregelparameterwerten derart gesteuert oder geregelt, dass das Werkzeug zurückgedreht wird, bis eine vorgegebene Stoppbedingung eintritt, und anschließend in Richtung der Blockade vorwärtsgedreht wird. Ferner wird eine Küchenmaschine vorgeschlagen, die zur Durchführung des Verfahrens ausgebildet ist, sowie eine Verwendung einer Küchenmaschine zum Behandeln oder Lösen einer Blockade.

## Beschreibung

Die vorliegende Erfindung betrifft ein Verfahren zum Betreiben einer Küchenmaschine, insbesondere zum Behandeln oder Lösen einer Blockade in einem Gefäß der Küchenmaschine, sowie eine Küchenmaschine, ein Computerprogrammprodukt und eine Verwendung einer Küchenmaschine.

Elektrisch betriebene Küchenmaschinen, insbesondere für den Haushaltsbereich, werden zur zumindest teilweise automatischen Zubereitung von Speisen/Gerichten bzw. zur Bearbeitung, insbesondere zum Erhitzen, Zerkleinern und/oder Mischen, von Lebensmitteln/Zutaten verwendet.

Es ist bei derartigen Küchenmaschinen bekannt, zur Zubereitung von Speisen bzw. Gerichten ein oder mehrere Lebensmittel in einem Gefäß mittels eines drehbaren, motorbetriebenen Werkzeugs zu bearbeiten, insbesondere zu Zerschneiden, Zerkleinern, Pürieren, Rühren, Mischen und/oder Kneten. Bei dem Werkzeug handelt es sich vorzugsweise um ein Messer, einen Rührer, einen Knethaken oder dergleichen, das insbesondere in die Küchenmaschine bzw. das Gefäß integriert bzw. eingesetzt ist.

Hierbei kann das Problem auftreten, dass das Werkzeug blockiert oder verklemmt, sich also im üblichen Betriebsmodus nicht weiterdreht, beispielsweise wenn am Gefäßboden ein Lebensmittel festgebacken ist oder sich festere Lebensmittel im Gefäß verkantet haben. In einem solchen Fall muss der Benutzer üblicherweise die Blockade manuell aus dem Gefäß entfernen, nachdem die Küchenmaschine abgeschaltet wurde.

Der vorliegenden Erfindung liegt die Aufgabe zugrunde, ein verbessertes Verfahren zum Betreiben einer Küchenmaschine, eine verbesserte Küchenmaschine zum Zubereiten von Lebensmitteln sowie eine verbesserte Verwendung einer solchen Küchenmaschine anzugeben, wobei eine sichere, zuverlässige, einfache, schnelle und/oder reproduzierbare Zubereitung bzw. Bearbeitung von Lebensmitteln zumindest teilautomatisch ermöglicht oder unterstützt wird.

Die der Erfindung zugrundeliegende Aufgabe wird durch ein Verfahren gemäß Anspruch 1, eine Küchenmaschine gemäß Anspruch 13, ein Computerprogrammprodukt gemäß Anspruch 14 oder eine Verwendung gemäß Anspruch 15 gelöst. Vorteilhafte Weiterbildungen sind Gegenstand der Unteransprüche.

Die vorschlagsgemäße Küchenmaschine ist eine elektrisch betriebene, insbesondere multifunktionale, Vorrichtung zur - insbesondere zumindest teilweise automatischen - Zubereitung von Speisen/Gerichten bzw. zur Bearbeitung, insbesondere zum Zerkleinern und/oder Mischen, von Lebensmitteln/Zutaten.

Zu diesem Zweck weist die vorschlagsgemäße Küchenmaschine ein Gefäß zur Aufnahme des Lebensmittels, und ein im Gefäß angeordnetes, drehbares Werkzeug, insbesondere zum Umrühren/Mischen und/oder Zerschneiden/Zerkleinern des Lebensmittels, auf.

Bevorzugt ist die Küchenmaschine auch zum Erhitzen/Kochen des Lebensmittels ausgebildet, insbesondere während das Lebensmittel mit dem Werkzeug bearbeitet, beispielsweise gerührt, wird. Zu diesem Zweck weist die Küchenmaschine bevorzugt ein (elektrisches) Heizsystem zum Erhitzen/Kochen des Lebensmittels auf.

Die vorschlagsgemäße Küchenmaschine weist einen Elektromotor auf, der zum (Dreh-)Antrieb des Werkzeugs mit diesem, vorzugsweise getriebelos, gekoppelt oder koppelbar ist. Zum Betrieb bzw. zur Steuerung oder Regelung des Elektromotors weist die Küchenmaschine, insbesondere der Elektromotor, einen Motorregler sowie einen Drehwinkelsensor auf.

Mittels des Drehwinkelsensors kann der (aktuelle) Drehwinkel bzw. die (aktuelle) Position des Elektromotors, insbesondere eines Rotors des Elektromotors, ermittelt, bestimmt und/oder erfasst werden. Basierend auf diesen Informationen kann der Elektromotor mittels des Motorreglers entsprechend geregelt bzw. (an)gesteuert werden, beispielsweise auf eine bestimmte (Soll-)Drehzahl geregelt werden.

Besonders bevorzugt ist der Drehwinkelsensor ein Absolutwertgeber bzw. dazu ausgebildet, den absoluten Drehwinkel, die absolute Position oder einen dazu korrespondierenden Wert zu bestimmen. Hierdurch wird vorzugsweise eine besonders präzise Motorregelung und/oder eine besonders präzise Durchführung des Verfahrens ermöglicht. Es ist aber auch möglich, dass der Drehwinkelsensor ein Inkrementalgeber ist und/oder für eine relative Bestimmung/Messung des Drehwinkels und/oder der Position ausgebildet ist.

Der Drehwinkelsensor ist vorzugsweise ein magnetbasierter Sensor, insbesondere ein magnetoresistiver Sensor, besonders bevorzugt ein Hall-Sensor oder TMR-Sensor (tunnel magnetoresistance sensor). Hierdurch wird eine besonders präzise bzw. hochaufgelöste Drehwinkelerfassung ermöglich und/oder ein einfacher Aufbau realisiert.

Der Drehwinkelsensor hat vorzugsweise eine Drehwinkel-Auflösung unter 5°, insbesondere unter 1°.

Unter einem "Drehwinkelsensor" im Sinne der vorliegenden Erfindung ist insbesondere keine Lichtschranke oder Anordnung von Lichtschranken oder anderweitige Einrichtungen zu verstehen, die insbesondere lediglich eine Geschwindigkeitsmessung des Elektromotors bzw. dessen Rotors ermöglichen, aber keine genauen Informationen über den Drehwinkel liefern.

Der Elektromotor ist vorzugsweise ein elektronisch kommutierter und/oder permanenterregter Elektromotor, insbesondere ein bürstenloser Gleichstrommotor (BLDC-Motor; Brushless DC Motor) und/oder ein Permanentmagnet-Synchronmotor (PMSM; Permanent Magnet Synchronous Motor). Grundsätzlich kann die vorschlagsgemäße Küchenmaschine auch einen anderen Elektromotor aufweisen und/oder das vorschlagsgemäße Verfahren mit einem anderen Elektromotor durchgeführt werden und vorteilhaft sein, beispielsweise einem Gleichstrommotor (DC-Motor).

Bei dem vorschlagsgemäßen Verfahren zum Betreiben der Küchenmaschine ist vorgesehen bei einer Blockade bzw. wenn ein Drehen des Werkzeugs in einer ersten Drehrichtung blockiert wird oder ist, den Elektromotor derart zu steuern oder zu regeln, dass das Werkzeug in einer der ersten Drehrichtung entgegengesetzten, zweiten Drehrichtung gedreht bzw. zurückgedreht wird. Die Steuerung bzw. Regelung erfolgt hierbei durch den Motorregler basierend auf vom Drehwinkelsensor erfassten Messwerten und mindestens einem vorgegebenen ersten Motorregelparameterwert.

Das Zurückdrehen bzw. Drehen in zweiter Drehrichtung erfolgt so lange, bis eine vorgegebene Stoppbedingung eintritt. Anschließend wird der Elektromotor derart gesteuert oder geregelt, dass das Werkzeug in der ersten Drehrichtung gedreht bzw. vorwärts gedreht wird. Die Steuerung bzw. Regelung erfolgt hierbei durch den Motorregler basierend auf vom Drehwinkelsensor erfassten Messwerten und mindestens einem vorgegebenen zweiten Motorregelparameterwert. Das Werkzeug wird hierbei also in Richtung bzw. auf die Blockade zu gedreht, insbesondere (erneut) gegen die Blockade gedreht.

Das vorschlagsgemäße Verfahren wird zum Behandeln der Blockade durchgeführt. Unter einem "Behandeln" ist hier vorzugsweise ein Lösen der Blockade zu verstehen, gegebenenfalls kann es sich aber auch nur um ein Teillösen handeln. Da ein erfolgreiches (Teil-)Lösen nicht garantiert ist, kann unter einem "Verfahren zum Behandeln einer Blockade" allgemeiner auch nur eine Vorschrift bzw. Schritte verstanden werden, die im Falle einer Blockade durchgeführt werden, um diese möglichst zu lösen.

Unter der "ersten Drehrichtung" bzw. "Vorwärtsrichtung" ist vorzugsweise die Richtung zu verstehen, in der das Blockieren aufgetreten ist bzw. in der die Blockade wirkt bzw. in der sich das Werkzeug bewegt hat, bevor es blockiert wurde. Dies kann eine generelle Vorzugsrichtung der Küchenmaschine oder des jeweiligen Rezepts sein, was aber nicht zwingend ist, wenn es keine Vorzugsrichtung gibt oder das Werkzeug in der weniger bevorzugten Richtung blockiert ist/wird. Entsprechend ist die "zweite Drehrichtung" bzw. "Rückwärtsrichtung" die Richtung entgegengesetzt zur ersten Drehrichtung bzw. Vorwärtsrichtung.

Die Begriffe "in erster Drehrichtung" und "vorwärts" werden nachfolgend vorzugsweise synonym verwendet und können entsprechend durch den anderen Begriff ersetzt werden. Gleiches gilt vorzugsweise für die Begriffe "in zweiter Drehrichtung" und "rückwärts".

Der erste Motorregelparameterwert ist vorzugsweise für die Steuerung bzw. Regelung des Elektromotors beim Zurückdrehen charakteristisch und/oder definiert die Motorcharakteristik bzw. Motordynamik, insbesondere die Anfahrdynamik, beim Zurückdrehen.

Der zweite Motorregelparameterwert ist vorzugsweise für die Steuerung bzw. Regelung des Elektromotors beim Vorwärtsdrehen charakteristisch und/oder definiert die jeweilige Motorcharakteristik bzw. Motordynamik, insbesondere die Anfahrdynamik, beim Vorwärtsdrehen.

Besonders bevorzugt handelt es sich bei dem ersten und/oder zweiten Motorregelparameterwert um eine Drehzahl, ein Drehmoment, einen Drehwinkel und/oder ein oder mehrere dazu korrespondierende Werte. Beispielsweise kann es sich um eine Soll-Drehzahl handeln, auf die der Elektromotor - und damit vorzugsweise auch das Werkzeug - geregelt wird.

Der erste und zweite Motorregelparameterwert können dem gleichen Motorregelparameter zugeordnet sein, beispielsweise Drehzahlen sein. Es ist aber auch möglich, dass der erste und zweite Motorregelparameterwert unterschiedlichen Motorregelparametern zugeordnet sind, beispielsweise dass beim Zurückdrehen ein Soll-Drehwinkel bzw. eine Soll-Position und beim Vorwärtsdrehen eine Soll-Drehzahl vorgegeben werden.

Die Stoppbedingung ist vorzugsweise eine Bedingung, die eintreten muss, damit der Elektromotor seine Motordynamik ändert, insbesondere seine Drehrichtung wechselt. Besonders bevorzugt ist/wird die Stoppbedingung erfüllt bzw. tritt ein, wenn ein vorgegebener Stoppwert erreicht oder überschritten ist. Bei dem Stoppwert handelt es sich bevorzugt um eine Stoppzeit, einen Stoppdrehwinkel, ein Stoppdrehmoment oder einen dazu korrespondierenden Wert. Beispielsweise könnte dem Motorregler eine bestimmte Zeit vorgegebenen werden, für die der Elektromotor in der zweiten Drehrichtung betrieben werden soll. Die Stoppbedingung tritt in diesem Fall ein, wenn die vorgegebene Zeit abgelaufen ist.

Es ist auch möglich, dass die Stoppbedingung mehrere Stoppwerte (von unterschiedlichen Stoppgrößen), beispielsweise sowohl eine Stoppzeit als auch ein Stoppdrehmoment umfasst. In diesem Fall kann die Stoppbedingung das Erreichen oder Überschreiten einer der mehreren Stoppwerte sein, oder alternativ das Erreichen oder Überschreiten von mehreren Stoppwerten. Beispielsweise könnte vorgegeben sein, dass sich nach einer bestimmten Zeit oder bei Erreichen/Überschreiten eines bestimmten Drehwinkels die Motordynamik ändert bzw. die Drehrichtung wechselt, je nachdem, welches Ereignis früher eintritt. Alternativ könnte vorgegeben sein, dass sich die Motordynamik nur dann ändert bzw. die Drehrichtung nur dann wechselt, wenn sowohl eine bestimmte Zeit abgelaufen als auch ein bestimmter Drehwinkel erreicht ist.

Die Stoppbedingung kann auch ein Blockieren des Werkzeugs in der zweiten Drehrichtung bzw. ein Erkennen einer Blockade beim Zurückdrehen sein oder umfassen.

Mit anderen Worten ändert sich die Motordynamik bzw. wechselt die Drehrichtung, wenn das Werkzeug beim Zurückdrehen in die zweite Drehrichtung blockiert. Hierbei kann es sich um die gleiche Blockade handeln, an der das Werkzeug dann insbesondere mit einer anderen, rückwärtsgewandten Seite blockiert.

In vorteilhafter Weise wird somit ein Verfahren vorgeschlagen, mit dem eine Blockade behandelt werden kann, ohne dass der Benutzer diese manuell entfernen muss. Dies ist einer sicheren, zuverlässigen, einfachen, schnellen und/oder reproduzierbaren Zubereitung bzw. Bearbeitung von Lebensmitteln zuträglich.

Durch die Möglichkeit, verschiedene Motorregelparameterwerte und/oder Stoppbedingungen vorzugeben, ist das Verfahren anpassbar. Eine entsprechende Anpassung kann hierbei herstellerseitig an die jeweilige Küchenmaschine und/oder deren Einsatzzwecke erfolgen. Es ist aber auch möglich, dass der Benutzer eine Anpassung vornehmen kann.

Besonders synergistisch wirken hierbei vorzugsweise die Verwendung eines Drehwinkelsensors und die Steuerung bzw. Regelung des Verfahrens basierend auf Messwerten des Drehwinkelsensors. Diese ermöglicht, die anzufahrenden Winkel und/oder die Motorgeschwindigkeit sehr genau einzustellen. Dies erlaubt eine Vielzahl unterschiedlicher Werte vorgeben zu können, das Verfahren also möglichst optimal anpassen zu können.

Vorzugsweise wird das Blockieren des Werkzeugs bzw. die Blockade automatisch von der Küchenmaschine erkannt. Dies ist für eine sichere, zuverlässige, einfache, schnelle und/oder reproduzierbare Zubereitung vorteilhaft, da der Benutzer die Bearbeitung des Lebensmittels mittels des Werkzeugs nicht (ständig) zu überwachen braucht.

Besonders bevorzugt wird bei einer automatischen Erkennung einer Blockade auch automatisch das Zurückdrehen bzw. das Verfahren bzw. die Schritte zur Behandlung, insbesondere zum Lösen, der Blockade eingeleitet. In vorteilhafter Weise muss ein Benutzer somit nicht einschreiten, um Maßnahmen bei einer Blockade zu ergreifen, was wiederum einer sicheren, zuverlässigen, einfachen, schnellen und/oder reproduzierbaren Zubereitung zuträglich ist.

Es ist aber auch möglich, dass zwar eine Blockade automatisch erkannt, das Zurückdrehen jedoch nicht automatisch, sondern nur durch Benutzereingabe eingeleitet wird. In diesem Fall wird vorzugsweise eine Meldung oder Anweisung, dass eine Blockade vorliegt, dem Benutzer angezeigt, beispielsweise über ein Display der Küchenmaschine.

Auch in diesem Fall ist das vorschlagsgemäße Verfahren vorteilhaft, da lediglich eine einfache/schnelle Benutzereingabe wie ein Knopfdruck zum Einleiten der Behandlung der Blockade nötig ist, auf ein Abschalten und manuelles Entfernen der Blockade jedoch verzichtet werden kann.

Ferner ist es auch möglich, dass keine automatische Erkennung vorgesehen ist, beispielsweise wenn der Benutzer den Zubereitungsschritt selbst durchführen muss und/oder sich dafür entscheidet, den Zubereitungsschritt selbst zu überwachen. Auch in diesem Fall ist jedoch vorzugsweise nur eine einfache/schnelle Benutzereingabe wie ein Knopfdruck zum Einleiten der Behandlung einer Blockade nötig.

Vorzugsweise wird eine Blockade dann erkannt, wenn ein oder mehrere Ist-Parameterwerte des Elektromotors einen entsprechenden Schwellwert über- oder unterschreiten, bevorzugt für eine bestimmte Zeitdauer oberhalb bzw. unterhalb des entsprechenden Schwellwerts liegen.

Bevorzugt wird eine Blockade dann erkannt, wenn, insbesondere für eine bestimmte Zeitdauer,
a) der Drehmomentwert oder ein hierzu korrespondierender Wert oberhalb eines bestimmten Drehmoment-Schwellwerts liegt; und/oder
b) der Drehzahlwert oder ein hierzu korrespondierender Wert unterhalb eines bestimmten Drehzahl-Schwellwerts liegt; und/oder
c) das Verhältnis des Drehzahlwerts zur Soll-Drehzahl unterhalb eines bestimmten Drehzahlverhältnis-Schwellwerts liegt.

Hierdurch wird in vorteilhafter Weise eine verlässliche Erkennung einer Blockade gewährleistet.

Besonders bevorzugt wird eine Blockade nur dann erkannt, wenn mindestens zwei, besonders bevorzugt nur wenn alle drei Bedingungen a), b) und c) erfüllt sind. Damit werden Fehlerkennungen noch weiter reduziert.

Für die zuvor beschriebenen Erkennung wird der Drehwinkel bzw. werden die Messwerte des Drehwinkelsensors vorzugsweise nur indirekt verwendet, um den Drehzahlwert zu bestimmen. Es ist aber auch möglich und kann bevorzugt sein, eine Blockade direkt basierend auf der Drehwinkelmessung zu erkennen. Hierbei wird insbesondere dann eine Blockade erkannt, wenn die Messwerte des Drehwinkelsensors ergeben, dass keine oder keine signifikante Änderung des Drehwinkels bzw. der Drehposition für eine bestimmte Zeit erfolgt.

Vorzugsweise ist das Drehmoment des Elektromotors bei der Rückwärtsbewegung stärker begrenzt als bei der Vorwärtsbewegung. Mit anderen Worten ist das Drehmoment bei der Rückwärtsbewegung auf einen Wert begrenzt, der geringer ist als ein entsprechender Begrenzungs- bzw. Schwellwert in Vorwärtsrichtung. Besonders bevorzugt kann der Elektromotor in Vorwärtsrichtung bis zu dem Maximal-Drehmoment, für das der Elektromotor ausgelegt ist, betrieben werden, während der Elektromotor bei der Rückwärtsbewegung auf einen niedrigeren Drehmomentwert begrenzt ist. Dies ist vorteilhaft, um zu verhindern, dass der Elektromotor auch bei der Rückwärtsbewegung blockiert bzw. verklemmt.

Vorzugsweise wird das Zurückdrehen in zweiter Drehrichtung und anschließende Vorwärtsdrehen in erster Drehrichtung mehrfach wiederholt, insbesondere bis das Werkzeug nicht mehr blockiert bzw. bis die Blockade gelöst ist oder bis eine maximale Wiederholungszahl, beispielsweise fünf Wiederholungen, erreicht ist. Es sind auch andere (Abbruch-)Kriterien als eine maximale Wiederholungszahl denkbar, beispielsweise der Ablauf einer maximalen Wiederholungszeit.

Es ist möglich, dass immer eine bestimmte bzw. die maximale Anzahl an Wiederholungen durchgeführt wird, insbesondere auch dann, wenn die Blockade bereits gelöst wurde. Bevorzugt ist jedoch, dass nur so viele Wiederholungen durchgeführt werden, bis die Blockade durchbrochen bzw. gelöst ist. Hierzu wird vorzugsweise bei jeder Vorwärtsbewegung automatisch überprüft bzw. erkannt, ob die Blockade weiterhin besteht, insbesondere wie zuvor beschrieben über Schwellwert-Vergleiche.

Besonders bevorzugt wird das Zurückdrehen in die zweite Drehrichtung und anschließende Drehen in die erste Drehrichtung mehrfach mit veränderten Motorregelparameterwerten und/oder veränderten Stoppbedingungen wiederholt, insbesondere mit steigender Frequenz, steigender Drehzahl, steigendem Drehmoment und/oder steigendem Drehwinkel. Beispielsweise könnte mit jeder Wiederholung die Drehzahl in die Vorwärtsrichtung erhöht werden.

Dies hat insbesondere den Vorteil, dass sich der Elektromotor an die Kraft bzw. Leistung, die benötigt wird, um die Blockade zu lösen, herantasten kann. Würde der Elektromotor direkt mit einer zu hohen Leistung starten, könnte das Lebensmittel beschädigt werden, was insbesondere problematisch ist, wenn nur ein Rühren ohne Zerschneiden erfolgen soll.

In einer Verfahrensvariante kann vorgesehen sein, dass die Blockade auch oder ausschließlich in der zweiten Drehrichtung behandelt wird und/oder das Werkzeugs bis zum Erreichen der Blockade in der zweiten Drehrichtung zurückgedreht wird. Insbesondere kann es je nach Ausbildung des Werkzeugs vorteilhaft sein, wenn die Blockade alternativ oder zusätzlich mit einer anderen Seite des Werkzeugs behandelt wird. Die Stoppbedingung ist in dieser Variante entsprechend festgelegt, beispielsweise durch einen entsprechend lange Stoppzeit oder als Bedingung eines Blockierens in die zweite Drehrichtung.

Bevorzugt wird die Blockade in dieser Variante sowohl in Vorwärts- als auch in Rückwärtsrichtung behandelt, insbesondere wird das Werkzeug rückwärts bewegt, bis es gegen die Blockade schlägt und anschließend vorwärtsbewegt, bis es gegen die Blockade schlägt, sofern die Blockade nicht bereits bei der Rückwärtsbewegung durchbrochen wurde. Dieser Vorgang kann wiederholt werden, so dass das Werkzeug abwechselnd vorwärts und rückwärts an die Blockade schlägt.

Alternativ wird die Blockade nur in der zweiten Drehrichtung behandelt. Das Werkzeug wird dann entsprechend wiederholt so vorwärts und rückwärts bewegt, dass es nur bei der Rückwärtsbewegung an die Blockade schlägt.

Bevorzugt werden bzw. sind die Stoppbedingung und/oder die Motorregelparameterwerte zum Behandeln der Blockade in Abhängigkeit vom Gefäß, vom Werkzeug, von einem Rezept und/oder von im Gefäß befindlichen Lebensmitteln, insbesondere automatisch, vorgegeben oder vorgebbar. Insbesondere kann das vorschlagsgemäße Verfahren zum Behandeln einer Blockade gefäßspezifisch, werkzeugspezifisch, rezeptspezifisch und/oder lebensmittelspezifisch unterschiedlich durchgeführt werden.

Beispielsweise kann berücksichtigt werden, ob sich harte oder weiche Lebensmittel im Gefäß befinden, insbesondere entsprechend angepasste Motorregelparameterwerte und/oder Stoppbedingung vorgegebenen werden. Ferner kann berücksichtigt werden, wie die Lebensmittel zubereitet werden sollen. Beispielsweise kann eine höhere Motorleistung bzw. entsprechende Motorregelparameterwerte und/oder Stoppbedingung vorgegebenen werden, wenn die Lebensmittel ohnehin zerkleinert werden sollen, als in dem Fall, bei dem die Lebensmittel nur verrührt aber nicht zerschnitten werden sollen. Dies ist einer zuverlässigen bzw. reproduzierbare Zubereitung bzw. Bearbeitung der Lebensmittel zuträglich.

Ein Lebensmittel im Sinne der vorliegenden Erfindung ist vorzugsweise ein Nahrungsmittel und/oder ein Genussmittel für den Verzehr. Lebensmittel können beispielsweise Produkte pflanzlichen Ursprungs, wie Gemüse, Obst und/oder ein Getreidetrockenprodukt, und/oder Produkte tierischen Ursprungs, wie Eier, Fleischwaren und/oder Milchprodukte, sein.

Ein Lebensmittel im Sinne der vorliegenden Erfindung kann ein Anfangs-, Zwischen- und/oder Endprodukt für den Verzehr bzw. für eine Speise und/oder ein Gericht sein. Insbesondere kann ein Lebensmittel im Sinne der vorliegenden Erfindung eine Zutat für eine Speise und/oder ein Gericht bilden und/oder selbst durch mehrere Lebensmittel gebildet sein.

Ein Rezept im Sinne der vorliegenden Erfindung ist vorzugsweise eine, insbesondere programmatische und/oder digitale, Anweisung zur Zubereitung bzw. Bearbeitung eines Lebensmittels mittels der Küchenmaschine, insbesondere um eine Speise und/oder ein Gericht und/oder Bestandteile davon zuzubereiten.

Vorzugsweise beinhaltet ein Rezept im Sinne der vorliegenden Erfindung ein oder mehrere (sequenzielle) Zubereitungsschritte, insbesondere wobei jeder Zubereitungsschritt Angaben bezüglich eines zu verwendenden Lebensmittels und einer mit dem Lebensmittel durchzuführenden Handlung umfasst. Beispielsweise kann ein Zubereitungsschritt eine (vorgegebene) Angabe zu der Menge des zu verwendenden Lebensmittels und eine einzustellende Drehzahl und Drehdauer des Elektromotors der Küchenmaschine umfassen.

Die Zubereitungsschritte eines Rezepts können manuell von einem Benutzer mit der Küchenmaschine durchgeführt und/oder an der Küchenmaschine eingestellt werden. Alternativ kann die Küchenmaschine dazu ausgebildet sein, zumindest teil-automatisiert, selbst einen oder mehrere Zubereitungsschritte durchzuführen. In letzterem Fall liegt das Rezept vorzugsweise in einer von der Küchenmaschine interpretierbaren Form vor, insbesondere digital und/oder als Programm.

Bevorzugt enthält das Rezept auch Anweisungen, insbesondere digital und/oder als Programm, wie bzw. mit welchen Werten und Bedingungen das vorschlagsgemäße Verfahren bei einem Blockieren des Werkzeugs durchzuführen ist. Die Anweisungen bzw. Werte/Bedingungen können hierbei für unterschiedliche Zubereitungsschritte unterschiedlich sein.

Ein Rezept kann auch Angaben dazu enthalten, welches Gefäß und/oder Werkzeug mit der Küchenmaschine verwendet werden soll, falls mehrere unterschiedliche Gefäße und/oder Werkzeuge zur Verfügung stehen. Es ist auch möglich, dass für unterschiedliche Zubereitungsschritte unterschiedliche Gefäße und/oder Werkzeuge vorgesehen sind.

Wie bereits zuvor erwähnt, ist die Küchenmaschine vorzugweise (auch) zum Erhitzen bzw. Kochen von im Gefäß befindlichen Lebensmitteln ausgebildet. Insbesondere weist die Küchenmaschine ein Heizsystem zum Heizen von im Gefäß befindlichen Lebensmitteln auf.

Vorzugsweise wird das Heizsystem abgeschaltet oder zumindest dessen Heizleistung reduziert, wenn ein Blockieren des Werkzeugs erkannt und/oder das Zurückdrehen in die zweite Drehrichtung eingeleitet und/oder die Behandlung der Blockade gestartet wird.

Auf diese Weise wird vorzugsweise verhindert, dass Lebensmittel anbrennen, wenn der Zubereitungsschritt unterbrochen wird, um die Blockade zu behandeln. Dies ist wiederum einer zuverlässigen und/oder reproduzierbaren Zubereitung zuträglich.

Die vorschlagsgemäße Küchenmaschine ist vorzugsweise dazu ausgebildet, dass vorschlagsgemäße Verfahren durchzuführen. Insbesondere bildet eine vorschlagsgemäße Küchenmaschine, die zur Durchführung des vorschlagsgemäßen Verfahrens ausgebildet ist, einen eigenständigen, auch unabhängig realisierbaren Aspekt der vorliegenden Erfindung.

Ein weiterer, auch unabhängig realisierbarer Aspekt der vorliegenden Erfindung betrifft ein Computerprogrammprodukt, das Befehle umfasst, die bei der Ausführung des Programms des Computerprogrammprodukts durch die Küchenmaschine, insbesondere eine Computereinrichtung bzw. Datenverarbeitungseinrichtung der Küchenmaschine, die Küchenmaschine dazu veranlasst, das vorschlagsgemäße Verfahren und/oder einen oder mehrere Verfahrensschritte des vorschlagsgemäßen Verfahrens durchzuführen. Insbesondere umfasst die Computereinrichtung eine Recheneinheit zum Ausführen des Programms des Computerprogrammprodukts und/oder einen Speicher, auf dem das Programm des Computerprogrammprodukts (elektronisch) gespeichert ist. Auf diese Weise werden entsprechende Vorteile realisiert.

Ein weiterer, auch unabhängig realisierbarer Aspekt der vorliegenden Erfindung betrifft eine Verwendung zum Behandeln oder Lösen einer Blockade in einem Gefäß der Küchenmaschine. Die Küchenmaschine ist vorzugsweise wie zuvor beschrieben ausgebildet. Insbesondere weist die Küchenmaschine ein drehbares Werkzeug, einen Elektromotor, einen Motorregler und einen Drehwinkelsensor auf.

Bei der vorschlagsgemäßen Verwendung wird bei einer Blockade der Motorregler basierend auf vom Drehwinkelsensor erfassten Messwerten und einem oder mehreren vorgegebenen Motorregelparameterwerten der Elektromotor derart gesteuert oder geregelt, dass das Werkzeug zurückgedreht wird, bis eine vorgegebene Stoppbedingung eintritt, und anschließend in Richtung der Blockade vorwärtsgedreht wird. Hierdurch können entsprechende Vorteile erzielt werden.

Besonders bevorzugt wird bei der vorschlagsgemäßen Verwendung das vorschlagsgemäße Verfahren durchgeführt. Insbesondere können einige oder alle der zuvor beschriebenen Merkmale des Verfahrens auch bei der Verwendung realisiert und vorteilhaft sein.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine schematische Darstellung einer vorschlagsgemäßen Küchenmaschine mit einem Werkzeug;
- Fig. 2: eine perspektivische Darstellung des Werkzeugs der Küchenmaschine;
- Fig. 3: einen Schnitt durch einen Elektromotor der Küchenmaschine;
- Fig. 4: eine perspektivische Ansicht eines Rotors und Stators des Elektromotors;
- Fig. 5: eine schematische Seitenansicht des Werkzeugs in einem blockierten Zustand;
- Fig. 6A: eine schematische Draufsicht des Werkzeugs vor Erreichen einer Blockade;
- Fig. 6B: eine schematische Draufsicht des Werkzeugs im blockierten Zustand;
- Fig. 6C: eine schematische Draufsicht des Werkzeugs im zurückgedrehten Zustand;
- Fig. 6D: eine schematische Draufsicht des Werkzeugs beim Durchbrechen der Blockade; und
- Fig. 6E: eine schematische Draufsicht des Werkzeugs nach Durchbrechen der Blockade.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

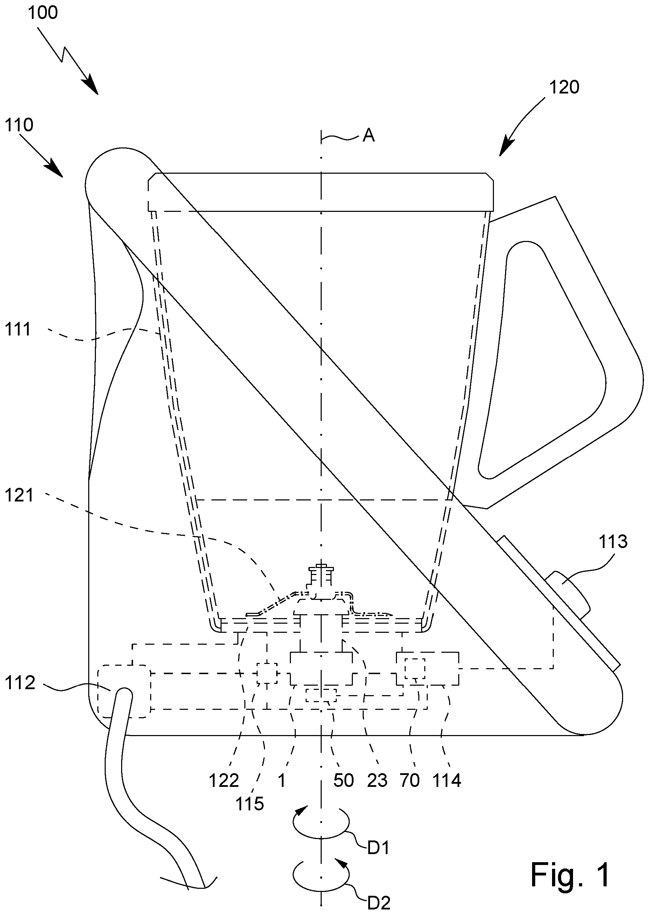

Fig. 1 zeigt schematisch eine vorschlagsgemäße Küchenmaschine 100 zur Zubereitung von Speisen bzw. Bearbeitung von Lebensmitteln L. Bei der Küchenmaschine 100 handelt es sich vorzugsweise um eine elektrisch betriebene Multifunktions-Küchenmaschine, die zum Zerschneiden bzw. Zerkleinern, Rühren bzw. Mischen, Kneten und/oder Erhitzen bzw. Kochen von Lebensmitteln L ausgebildet ist.

Die Küchenmaschine 100 weist vorzugsweise eine Basisstation 110 und/oder ein Gefäß 120 zur Aufnahme von Lebensmitteln L auf.

Die Basisstation 110 und das Gefäß 120 sind vorzugsweise elektrisch und/oder mechanisch verbunden oder verbindbar, insbesondere um ein Erhitzen und/oder Zerschneiden/Mischen/Umrühren/Kneten des Lebensmittels L in dem Gefäß 120 zu ermöglichen.

Fig. 1 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Werkzeug 121 ausgestattet, insbesondere um Lebensmittel L im Gefäß 120 zu zerschneiden, zu zerkleinern, zu mischen, zu rühren und/oder zu kneten. Das Werkzeug 121 ist vorzugsweise am Boden 123 des Gefä-ßes 120 angeordnet bzw. drehbar gelagert.

Das Werkzeug 121 ist, insbesondere um eine Drehachse A, sowohl in einer ersten Drehrichtung D1 - beim Darstellungsbeispiel im Uhrzeigersinn bzw. Rechtslauf - als auch in einer zweiten Drehrichtung D2 - beim Darstellungsbeispiel gegen den Uhrzeigersinn bzw. im Linkslauf - drehbar, wie in Fig. 1 angedeutet.

Die Begriffe "axial", "radial" und "in Umfangsrichtung" beziehen sich vorzugsweise auf die Rotationsachse A, sofern nicht anders angegeben.

Das Gefäß 120 ist mechanisch mit der Basisstation 110 verbunden oder verbindbar, um das Werkzeug 121 mittels der Basisstation 110 anzutreiben.

Zum Antrieb des Werkzeugs 121 weist die Küchenmaschine 100, insbesondere die Basisstation 110, einen Elektromotor 1 auf, der über eine Welle 23 - vorzugsweise mittels eines Wellenaufsatzes 80 - mit dem Werkzeug 121 verbunden oder verbindbar ist und/oder - in der Anschlussposition - von unten formschlüssig in den Boden des Gefäßes 120 eingreift.

Begriffe wie "oben", "unten" und dergleichen beziehen sich vorzugsweise auf die bevorzugte Ausrichtung und/oder Anordnung der jeweiligen Komponenten im eingebauten Zustand bzw. in üblicher Gebrauchslage der Küchenmaschine 100.

Vorzugsweise entspricht die Rotationsachse des Elektromotors 1 der Drehachse A des Werkzeugs 121 und/oder einer Mittelachse des Gefäßes 120, die mittig durch das Gefäß 120 verläuft, wie in Fig. 1 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Vorzugsweise wird das Werkzeug 121 direkt bzw. getriebelos von dem Elektromotor 1 angetrieben. Prinzipiell wäre aber auch eine Übertragung der Drehbewegung des Elektromotors 1 auf das Werkzeug 121 mittels eines Getriebes möglich.

Zum Erhitzen bzw. Kochen von Lebensmitteln L ist das Gefäß 120 vorzugsweise (elektrisch) beheizbar bzw. weist die Küchenmaschine 100 ein (elektrisches) Heizsystem 122 auf. Besonders bevorzugt ist das Heizsystem 122 als Dickschichtheizung ausgebildet.

Bei der dargestellten Ausführungsform ist das Heizsystem 122 in das Gefäß 120, integriert bzw. bildet das Heizsystem 122 einen Boden 123 des Gefäßes 120 oder einen Teil davon. Es sind jedoch auch konstruktive Lösungen möglich, bei denen die Basisstation 110 das Heizsystem 122 aufweist oder bildet.

Die Küchenmaschine 100, insbesondere die Basisstation 110, weist vorzugsweise eine Stromversorgung 112 auf, um den Elektromotor 1 und/oder andere Einrichtungen der Küchenmaschine 100, wie das Heizsystem 122, mit elektrischem Strom zu versorgen.

Die Küchenmaschine 100, insbesondere die Basisstation 110, weist vorzugsweise eine Benutzerschnittstelle 113, insbesondere gebildet durch eine Ausgabeeinrichtung wie einen Bildschirm und eine Eingabeeinrichtung wie einen Drehknopf, und/oder eine Computereinrichtung 114 auf.

Die Computereinrichtung 114 ist vorzugsweise zur Steuerung des Heizsystems 122 und/oder des Elektromotors 1 und/oder zum Datenaustausch mit diesen elektrisch verbunden, wie in Fig. 1 durch Strichlinien angedeutet.

Über die Benutzerschnittstelle 113 kann ein Nutzer mit der Küchenmaschine 100 interagieren, insbesondere ein Rezept auswählen oder vorgeben und/oder Informationen bezüglich eines Rezepts bzw. bezüglich Zubereitungsschritten des Rezepts abrufen.

Die Computereinrichtung 114 ist vorzugsweise zur Speicherung und/oder Verarbeitung (digitaler) Rezepte ausgebildet.

Insbesondere ist die Computereinrichtung 114 dazu ausgebildet, den Elektromotor 1 bzw. das Werkzeug 121 und/oder das Heizsystem 122 insbesondere entsprechend den Vorgaben eines Rezepts zu steuern oder zu regeln und/oder entsprechende Steuer- oder Regelparameter zu übergeben, beispielsweise den Elektromotor 1 und/oder das Heizsystem 122 zu aktivieren bzw. zu deaktivieren und/oder die Heizleistung des Heizsystems 122 anzupassen, vorzugsweise zumindest teilweise automatisch.

Die Computereinrichtung 114 kann auch dazu ausgebildet sein, mit externen Geräten wie einem Mobiltelefon oder einem Server zu kommunizieren, beispielsweise um Rezepte davon abzurufen.

Ferner ist es auch möglich, dass die Benutzerschnittstelle 113 ganz oder teilweise durch ein externes Gerät wie ein Mobiltelefon gebildet ist.

Die Küchenmaschine 100 weist vorzugsweise einen Motorregler 70 zur Steuerung oder Regelung des Elektromotors 1 auf.

Beim Darstellungsbeispiel gemäß Fig. 1 ist der Motorregler 70 vorzugsweise durch die Computereinrichtung 114 gebildet bzw. die Computereinrichtung 114 weist den Motorregler 70 auf. Es ist auch möglich, dass der Motorregler 70 vom oder am Elektromotor 1 gebildet ist oder eine von der Computereinrichtung 114 und dem Elektromotor 1 separate Einrichtung ist.

Der Motorregler 70 ist vorzugsweise dazu ausgebildet, die Leistung, Drehzahl, Drehdauer und/oder Drehrichtung des Elektromotors 1 anzupassen, vorzugsweise zumindest teilweise automatisch, insbesondere gemäß einer Motordynamik und/oder basierend auf Motorregelparameter(werte)n.

Die Motordynamik und/oder Motorregelparameterwerte sind vorzugsweise vorgegeben oder vorgebbar, insbesondere von der Computereinrichtung 114 und/oder basierend auf dem Rezept und/oder mittels der Benutzerschnittstelle 113. Beispielsweise könnte ein Motorregelparameterwert eine bestimmte Soll-Drehzahl sein, auf die der Elektromotor 1 mittels des Motorreglers 70 geregelt wird.

Die Küchenmaschine 100, insbesondere der Elektromotor 1, weist vorzugsweise einen Drehwinkelsensor 50 zur Erfassung des Drehwinkels des Elektromotors 1 auf. Die vom Drehwinkelsensor 50 erfassten Messwerte werden vorzugsweise der Computereinrichtung 114 und/oder dem Motorregler 70 übergeben, um den Elektromotor 1 basierend auf den Messwerten zu steuern oder zu regeln. Hierzu ist der Drehwinkelsensor 50 vorzugsweise mit der Computereinrichtung 114 und/oder dem Motorregler 70 elektrisch verbunden, wie in Fig. 1 mit einer Strichlinie angedeutet.

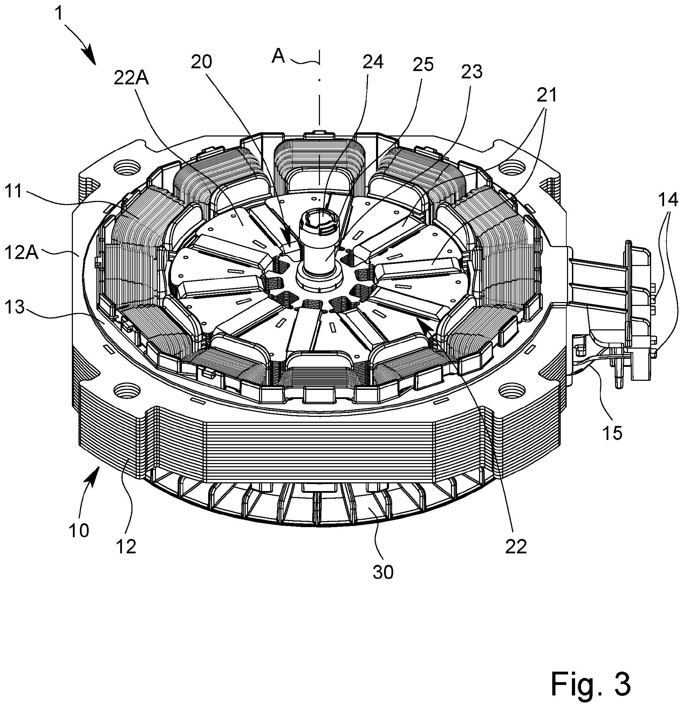

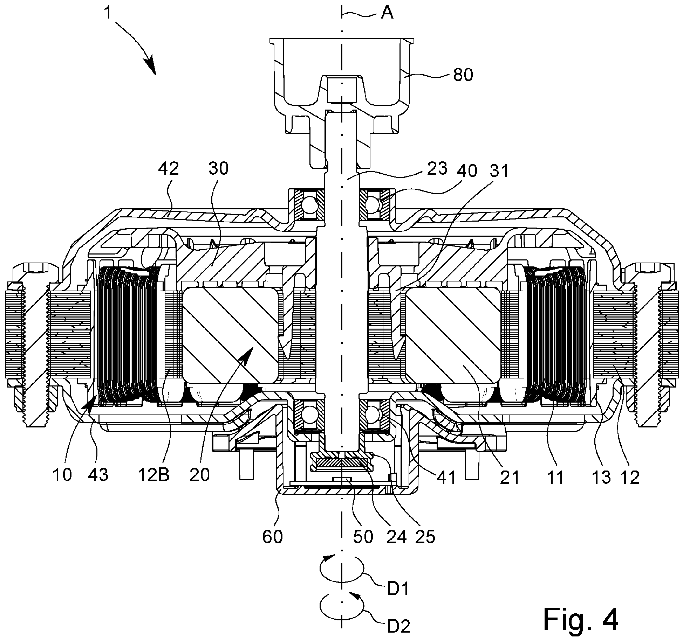

Auf den Drehwinkelsensor 50 wird nachfolgend mit Bezug zu Fig. 3 und 4 noch genauer eingegangen.

Vorzugsweise weist die Küchenmaschine 100 - zusätzlich zu dem Drehwinkelsensor 50 - eine oder mehrere (weitere) Messeinrichtungen 115 auf. Mittels der bzw. den Messeinrichtung(en) 115 können eine oder mehrere Messgrößen, wie eine Temperatur, ein Gewicht, eine elektrische Spannung, eine elektrische Stromstärke, ein elektrischer Widerstand, eine Drehzahl, ein Druck, eine Luftfeuchtigkeit und/oder eine Neigung der Küchenmaschine 100, besonders bevorzugt des Elektromotors 1 und/oder des Heizsystems 122, (direkt oder indirekt) bestimmt bzw. gemessen werden. Zu diesem Zweck weist/weisen die Messeinrichtung(en) 115 einen oder mehrere Sensoren bzw. Messgeräte auf, wie einen Temperatursensor, eine Waage, ein Spannungsmessgerät, ein Strommessgerät, ein Drehzahlmessgerät, einen Drucksensor, einen Feuchtigkeitssensor und/oder einen Neigungssensor.

Der Drehwinkelsensor 50 ist insbesondere (auch) eine Messeinrichtung der Küchenmaschine 100.

Abhängig von der Drehgeschwindigkeit bzw. Drehzahl und/oder der Drehrichtung des Werkzeugs 121 bzw. Elektromotors 1 ist die Küchenmaschine 100 vorzugsweise sowohl zum Rühren (insbesondere bei kleinen Drehzahlen) als auch zum Zerkleinern (insbesondere bei mittleren bis großen Drehzahlen) von Zutaten ausgebildet. Besonders bevorzugt ist auch ein langsames Rühren, beispielsweise mit 1 U/min oder 10 U/min, und/oder ein sehr feines bzw. definiertes Zerkleinern, beispielsweise mit 10.000 U/min, 12.000 U/min oder 15.000 U/min, möglich.

Es kann vorgesehen sein, dass die Küchenmaschine 100 bzw. die Basisstation 110 mit unterschiedlichen Gefäßen 120 und/oder unterschiedlichen Werkzeugen 121 betreibbar bzw. verwendbar ist, insbesondere abhängig vom Rezept bzw. der zuzubereitenden Speise bzw. von dem/den Lebensmittel(n) L. Es ist auch denkbar, dass abhängig vom Zubereitungsschritt unterschiedliche Gefäße 120 und/oder Werkzeuge 121 bei der Ausführung eines Rezepts benutzt werden.

Die Gefäße 120 können sich beispielsweise in ihrer Form, Größe und/oder im Werkzeug 121 unterscheiden, je nach Art der vorgesehen Benutzung. Es kann auch vorgesehen sein, dass bei gleichem Gefäß 120 das Werkzeug 121 austauschbar ist.

Vorzugsweise ist die Küchenmaschine 100, insbesondere die Basisstation 110 bzw. deren Computereinrichtung 114 und/oder Messeinrichtung 115, dazu ausgebildet, automatisch das eingesetzte/verwendete Gefäß 120 und/oder Werkzeug 121 zu erkennen. Alternativ oder zusätzlich kann vorgesehen sein, dass der Benutzer, insbesondere über die Benutzerschnittstelle 113, mitteilen kann, welches Gefäß 120 bzw. welches Werkzeug 121 verwendet wird.

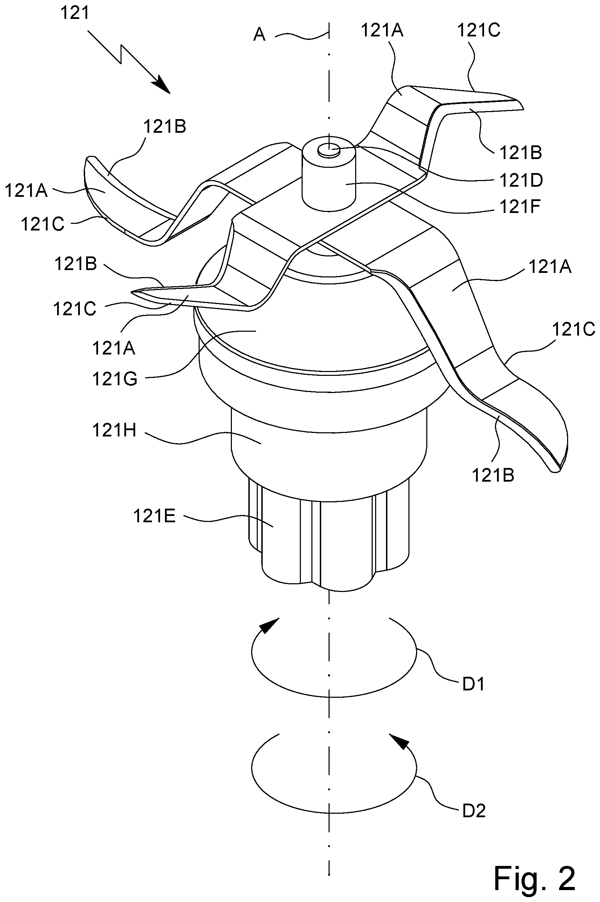

Fig. 2 zeigt eine bevorzugte Ausführung des Werkzeugs 121 in einer schematischen, perspektivischen Darstellung. Grundsätzlich ist die Erfindung nicht auf das dargestellten und nachfolgend beschriebene Werkzeug 121 beschränkt. Insbesondere kann das vorschlagsgemäße Verfahren auch bei Küchenmaschinen mit anderen Werkzeugen durchgeführt werden und vorteilhaft sein.

Vorzugsweise ist das Werkzeug 121 ein Schneid- und/oder Rührwerkzeug.

Besonders bevorzugt ist das Werkzeug 121 wie in der DE 10 2012 107 520 A1 beschrieben ausgebildet, deren gesamter Inhalt hiermit in diese Anmeldung aufgenommen wird.

Das Werkzeug 121 weist vorzugsweise ein oder mehrere, insbesondere austauschbare, Messer bzw. Blätter bzw. Arme 121A auf.

Der Arm bzw. die Arme 121A erstrecken sich vorzugsweise zumindest im Wesentlichen in radialer Richtung von einer Symmetrieachse bzw. Rotationsachse A des Werkzeugs 121 bzw. ist/sind um die Symmetrie- bzw. Rotationsachse A des Werkzeugs 121 drehbar gelagert.

Im Falle mehrerer Arme 121A sind diese vorzugsweise gleichmäßig um die Rotationsachse A herum angeordnet.

Beim Darstellungsbeispiel weist das Werkzeug 121 vorzugsweise vier Arme 121A auf, wobei benachbarte Arme 121A vorzugsweise (etwa) einen rechten Winkel einschließen.

Beim Darstellungsbeispiel sind vorzugsweise jeweils zwei gegenüberliegende Arme 121A einstückig miteinander ausgebildet.

Vorzugsweise weist der/jeder Arm 121A eine Schneide bzw. Schneidkante 121B auf, um Lebensmittel L zu zerschneiden bzw. zu zerkleinern.

Die/jede Schneide 121B ist vorzugsweise in die erste Drehrichtung D1 gerichtet bzw. orientiert und/oder an der in erster Drehrichtung D1 gerichteten Seite des (jeweiligen) Arms 121A angeordnet bzw. gebildet.

Vorzugsweise weist der/jeder Arm 121A nur einseitig eine Schneide 121B auf.

Die in Drehrichtung D2 gewandte Seite bzw. der (jeweiligen) Schneide 121B gegenüberliegende Seite des/jedes Arms 121A formt vorzugsweise einen Rücken 121C aus.

Der (jeweilige) Rücken 121C ist gegenüber der Schneide 121B vorzugsweise stumpf ausgebildet. Insbesondere ist der Rücken 121C (wesentlich) dicker als die Schneide 121B ausgebildet, bevorzugt um mindestens das 10-fache, 20-fache oder 30-fache.

Das Werkzeug 121 weist vorzugsweise nur in die erste Drehrichtung D1 orientierte bzw. gerichtete Schneiden 121B auf.

Die Schneide(n) 121B des Werkzeugs 121 wirkt/wirken vorzugsweise nur bei Rotation/Drehung des Werkzeugs 121 bzw. des/der Arm(e) 121A in die erste Drehrichtung D1. Insbesondere kommt/kommen die Schneide(n) 121B nur bei Drehung in der ersten Drehrichtung D1 mit Lebensmitteln L in Kontakt, um diese zu zerschneiden.

Bei Drehung in die zweite Drehrichtung D2 wirkt/wirken vorzugsweise nur der/die Rücken 121C bzw. kommt/kommen nur der/die Rücken 121C mit den Lebensmitteln L in Kontakt. Vorzugsweise werden die Lebensmittel L bei Kontakt mit dem/den Rücken 121C nur vermischt bzw. verrührt, insbesondere nicht zerschnitten.

Vorzugsweise bewirkt die Drehung des Werkzeugs 121 in die erste Drehrichtung D1 (auch) ein Vermischen bzw. Verrühren der Lebensmittel L.

Die Schneiden 121B können unterschiedlich geformt sein, insbesondere konkav oder konvex. Bei mehreren Schneiden 121B sind diese vorzugsweise zumindest teilweise unterschiedlich geformt, insbesondere teilweise konkav und teilweise konvex. Für die Rücken 121C gilt vorzugsweise entsprechendes.

Die Arme 121A können gebogen ausgebildet sein, insbesondere so dass die Schneiden 121B und/oder Rücken 121C in unterschiedlichen (axialen) Höhen (bezogen auf die Rotationsachse A) angeordnet sind, wie in Fig. 2 beispielhaft gezeigt.

Der/die Arm(e) 121A ist/sind vorzugsweise mit einer Werkzeugwelle 121D drehfest verbunden. Der/die Arm(e) 121A können aber auch schwenkbar mit der Werkzeugwelle 121D verbunden sein, insbesondere wie in Abs. [0072] bis [0078] der DE 10 2012 107 520 A1 beschrieben.

Die Werkzeugwelle 121D erstreckt sich vorzugsweise entlang der Rotationsachse A.

Das Werkzeug 121 weist vorzugsweise einen Kopplungsabschnitt 121E auf, der insbesondere drehfest mit der Werkzeugwelle 121D verbunden ist.

Der Kopplungsabschnitt 121E ist vorzugsweise mit dem Elektromotor 1 bzw. einem Rotor 20 des Elektromotors 1 bzw. der Welle 23, insbesondere einem Aufsatz 80, gekoppelt bzw. koppelbar. Der Aufsatz 80 ist in Fig. 4 dargestellt.

Vorzugsweise weist der Kopplungsabschnitt 121E eine zum Aufsatz 80 korrespondiere Form auf, so dass zwischen dem Kopplungsabschnitt 121E und dem Aufsatz 80 ein in beide Drehrichtungen D1, D2 formschlüssige Kopplung entsteht bzw. sodass die Welle 23 des Elektromotors 1 und die Werkzeugwelle 121D über den Kopplungsabschnitt 121E und den Aufsatz 80 drehfest miteinander gekoppelt bzw. koppelbar sind.

Eine Rotation des Rotors 20 bzw. dessen Welle 23 bewirkt vorzugsweise eine Rotation der Werkzeugwelle 23D bzw. des Arms / der Arme 121A.

Der/die Arm(e) 121A ist/sind vorzugsweise mittels eines drehfest mit der Werkzeugwelle 121D verbundenen Kopfteils 121F am Werkzeug 121 gesichert, wie in Fig. 2 dargestellt.

Vorzugsweise weist das Werkzeug 121 einen oder mehrere Festlegungsabschnitte 121G, 121H auf, um das Werkzeug 121 am Gefäß 120, insbesondere dessen Boden, festzulegen.

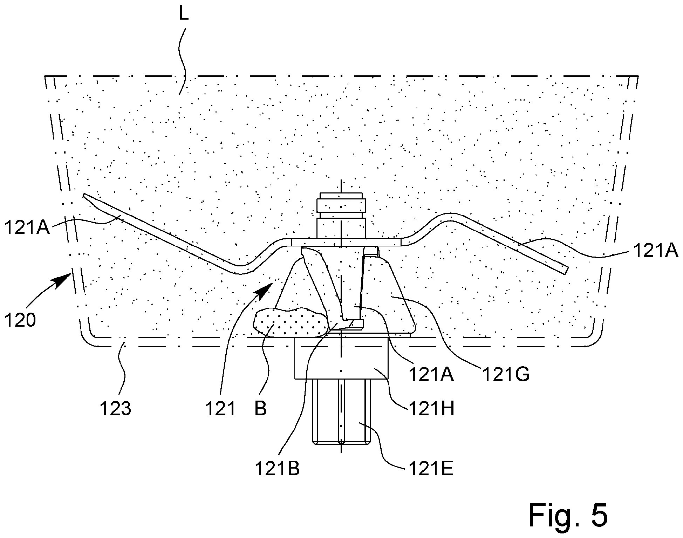

Beim Darstellungsbeispiel weist das Werkzeug 121 einen oberen Festlegungsabschnitt 121G und einen unteren Festlegungsabschnitt 121H auf. Der obere Festlegungsabschnitt 121G ist vorzugsweise im Gefäß 120 bzw. oberhalb dessen Bodens angeordnet/anordenbar. Der untere Festlegungsabschnitt 121H ist vorzugsweise außerhalb des Gefäßes 120 bzw. unterhalb dessen Bodens 123 angeordnet/anordenbar. Dies ist beispielhaft in Fig. 5 dargestellt.

Der obere und untere Festlegungsabschnitt 121G, 121H sind vorzugsweise separate Bauteile. Vorzugsweise sind der obere und untere Festlegungsabschnitt 121G, 121H miteinander (reversibel) verbunden/verbindbar, beispielsweise ineinander geschraubt/schraubbar.

Fig. 3 zeigt eine bevorzugte Ausführung des Elektromotors 1 zum Antrieb des Werkzeugs 121 in einer schematischen Querschnittansicht. Fig. 4 zeigt ausgewählte Komponenten, insbesondere einen Stator 10 und einen Rotor 20, des Elektromotors 1 in einer perspektivischen Darstellung.

Grundsätzlich ist die Erfindung nicht auf den dargestellten und nachfolgend beschriebenen Elektromotor 1 beschränkt. Insbesondere kann das vorschlagsgemäße Verfahren auch bei Küchenmaschinen mit anderen Elektromotoren durchgeführt werden und vorteilhaft sein.

Bei der dargestellten Ausführungsform ist der Elektromotor 1 als bürstenloser Gleichstrommotor (BLDC-Motor) bzw. Permanentmagnet-Synchronmotor (PMSM) ausgebildet. Es sind jedoch grundsätzlich auch andere Lösungen möglich.

Der Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse relativ zum Stator 10 drehbar ist.

Die Rotationsachse des Elektromotors 1 entspricht im montierten Zustand vorzugsweise der Rotationsachse A des Werkzeugs 121 bzw. der Mittelachse des Gefä-ßes 120, wie in Fig. 1 dargestellt. Im Folgenden wird die Rotationsachse des Elektromotors 1 daher ebenfalls als Rotationsachse A bezeichnet. Auch die Drehrichtungen des Elektromotors 1 entsprechen vorzugsweise den Drehrichtungen D1, D2 des Werkzeugs 121 und werden daher nachfolgend ebenfalls als erste Drehrichtung D1 und zweite Drehrichtung D2 bezeichnet.

Grundsätzlich ist es aber auch möglich, dass die Rotationsachse des Elektromotors 1 und die Rotationsachse A des Werkzeugs 121 unterschiedlich sind, insbesondere wenn die Übertragung der Drehbewegung des Elektromotors 1 auf das Werkzeug 121 mittels eines Getriebes erfolgt. Auch die Drehrichtungen des Elektromotors und des Werkzeugs können dann unterschiedlich, insbesondere vertauscht, sein.

Der Rotor 20 ist in der ersten Drehrichtung D1 und der zweiten Drehrichtung D2 um die Rotationsachse A (relativ zum Stator 10) drehbar. Hierbei ist die zweite Drehrichtung D2 der ersten Drehrichtung D1 entgegensetzt. Beim Darstellungsbeispiel ist in üblicher Gebrauchslage des Elektromotors 1 die erste Drehrichtung im Uhrzeigersinn bzw. ein Rechtslauf und die zweite Drehrichtung gegen den Uhrzeigersinn bzw. ein Linkslauf, wie in Fig. 4 dargestellt.

Der Elektromotor 1 ist vorzugsweise sowohl in der ersten Drehrichtung D1 als auch der zweiten Drehrichtung D2, insbesondere sowohl im Rechtslauf als auch im Linkslauf, betreibbar.

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den Elektromotor 1 als Außenläufer-Motor auszubilden (nicht dargestellt).

Der Stator 10 weist vorzugsweise mehrere, hier zwölf, Wicklungen/Spulen 11, einen Statorkern 12, einen Spulenträger 13, eine Anschlusseinrichtung 14 und/oder eine Anschlusshalterung 15 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte 12B, wobei jede Wicklung/Spule 11 um einen Spulenabschnitt/Statorzahn 12B gewickelt ist und/oder sich jeweils ein Spulenabschnitt/Statorzahn 12B durch eine Spule 11 hindurch erstreckt.

Beim Darstellungsbeispiel sind vorzugsweise jeweils vier Spulen 11 aus dem gleichen Spulendraht gewickelt, insbesondere zwei benachbarte Spulen 11 und deren jeweils gegenüberliegenden Spulen 11. Die zwölf Spulen 11 des Darstellungsbeispiels lassen sich also vorzugsweise in drei Gruppen einteilen, die insbesondere separat ansteuerbar sind. Es handelt sich vorzugsweise um einen dreiphasigen Elektromotor 1. Generell sind jedoch auch andere Lösungen möglich.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden.

Die Anschlusseinrichtung 14 ist vorzugsweise von einer Anschlusshalterung 15 getragen, die vorzugsweise einstückig mit dem Spulenträger 13 ist bzw. einen Teil des Spulenträgers 13 bildet.

Beim Darstellungsbeispiel weist der Rotor 20 vorzugsweise mehrere, hier zehn, Rotormagnete bzw. Permanentmagnete 21, einen Rotorkern 22, eine Welle 23 und/oder einen Lüfter 30, insbesondere ein Lüfterrad, auf.

Die Permanentmagnete 21 sind vorzugsweise im Rotorkern 22 angeordnet bzw. eingebettet.

Die Permanentmagnete 21 sind vorzugweise sternförmig im Rotor 20 bzw. Rotorkern 22 und/oder um die Welle 23 bzw. Rotationsachse A herum angeordnet und/oder erstrecken sich bzw. haben eine Haupt-/Längserstreckung - bezogen auf die Welle 23 bzw. Rotationsachse A - in radialer Richtung.

Die Permanentmagnete 21 sind vorzugsweise gleichmäßig über einen Kreisumfang verteilt. Benachbarte Permanentmagneten 21 schließen also vorzugsweise einen Winkel von 360° geteilt durch die Anzahl der Permanentmagnete 21 ein.

Grundsätzlich können die Permanentmagnete 21 auch anders als im Darstellungsbeispiel geformt und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Vorzugsweise umfasst der Rotorkern 22 mehrere gestapelte Elektrobleche bzw. Rotorbleche 22A oder ist daraus gebildet.

Der Lüfter 30 ist vorzugsweise an der Welle 23 befestigt, insbesondere kraft-, form- und/oder stoffschlüssig. Zusätzlich oder alternativ kann der Lüfter 30 an dem Rotorkern 22 befestigt sein, insbesondere kraft-, form- und/oder stoffschlüssig. Auch ist es möglich, dass der Lüfter 30 an den Rotorkern 22 und/oder die Welle 23 angespritzt ist.

Vorzugsweise ist der Lüfter 30 aus Kunststoff hergestellt und/oder einstückig gebildet, insbesondere spritzgegossen.

Der Lüfter 30 ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse des Lüfters 30.

Der Lüfter 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert das Lüfterrad 30 bei Betrieb des Elektromotors 1 um die Rotationsachse A und kann so entsprechend Luft fördern.

Der Lüfter 30 kann, insbesondere einstückig mit dem Lüfter 30 gebildete, Fixierelemente 31 aufweisen, die die Permanentmagnete 21 im Rotorkern 22 fixieren bzw. klemmen. Zusätzlich oder alternativ können die Permanentmagnete 21 auch mit dem Rotorkern verklebt sein und/oder durch andere, nicht vom Lüfter 30 gebildete Fixierelemente befestigt sein.

Der Elektromotor 1 weist vorzugsweise ein, insbesondere scheiben- bzw. ringförmiges, Lager 40, 41, bevorzugt ein oberes Lager 40 und ein unteres Lager 41, auf. Der Rotor 20, insbesondere die Welle 23 des Rotors 20, ist vorzugsweise an dem/den Lager(n) 40, 41 drehbar gelagert. Vorzugsweise ist das Lager 40, 41 mit der Welle 23 verpresst oder verklebt. Prinzipiell wäre es auch möglich, den Rotor 20 nur einseitig zu lagern.

Der Elektromotor 1 weist vorzugsweise ein Lagerschild bzw. eine Lagerbrücke 42, 43 für das Lager 40, 41 auf, insbesondere für jedes Lager 40, 41 jeweils eine Lagerbrücke 42, 43 (obere Lagerbrücke 42, untere Lagerbrücke 43). Die Lagerbrücke(n) 42, 43 bildet/bilden vorzugsweise ein (Außen-)Gehäuse des Elektromotors 1 oder einen Teil eines (Außen-)Gehäuses. Die Lagerbrücke(n) 42, 43 ist/sind vorzugsweise am Stator 10 bzw. Statorkern 12 befestigt, insbesondere festgeschraubt.

Bevorzugt weist der Elektromotor 1 den bereits zuvor erwähnten Aufsatz 80 auf, der vorzugsweise drehfest mit der Welle 23 verbunden, insbesondere auf die Welle 23 aufgesteckt, ist. Über den Aufsatz 80 kann vorzugsweise die Drehbewegung des Rotors 20 auf das Werkzeug 121 übertragen werden. Der Aufsatz 80 und der Kopplungsabschnitt 121E des Werkzeugs 121 sind hierzu vorzugsweise komplementär zueinander ausgebildet.

Es ist aber auch möglich, dass das Werkzeug 121 direkt mit der Welle 23 verbunden wird.

Nachfolgend wird anhand von Fig. 4 eine bevorzugte Ausführungsform des Drehwinkelsensors 50 und eine bevorzugte Anordnung zur Erfassung des Drehwinkels mittels des Drehwinkelsensors 50 beschrieben.

Die Verwendung und/oder Anordnung des Drehwinkelsensors 50 mit/an dem dargestellten Elektromotor 1 ist hierbei nur beispielhaft. Insbesondere kann der nachfolgend beschriebene Drehwinkelsensor 50 auch mit anderen Elektromotoren von Küchenmaschinen verwendet bzw. an anderen Elektromotoren von Küchenmaschinen angeordnet werden und vorteilhaft sein.

Der Drehwinkelsensor 50 ist vorzugsweise dazu ausgebildet, den Drehwinkel und/oder die Position des Elektromotors 1, insbesondere des Rotors 20, und/oder des Werkzeugs 121 (sensorisch) zu erfassen, besonders bevorzugt berührungslos und/oder verschleißfrei, insbesondere mittels eines Magnetfelds bzw. einer Magnetfeldänderung.

Die (Drehwinkel-)Auflösung des Drehwinkelsensors 50 ist vorzugsweise geringer als 30° oder 20°, insbesondere geringer als 10° oder 5°, bevorzugt geringer als 1°, besonders bevorzugt geringer als 0,1°.

Der Drehwinkelsensor 50 ist vorzugsweise ein Encoder bzw. Drehgeber bzw. Drehwinkelgeber bzw. Drehwertgeber.

Besonders bevorzugt ist der Drehwinkelsensor 50 ein Absolut(dreh)wertgeber. Mit anderen Worten ist der Drehwinkelsensor 50 besonders bevorzugt dazu ausgebildet, die Absolutposition bzw. den Absolutdrehwinkel des Elektromotors 1 oder einen hierzu korrespondierenden Wert zu erfassen bzw. zu bestimmen bzw. auszugeben. Vorzugsweise steht der Messwert sofort nach dem Einschalten zur Verfügung.

Vorzugsweise liefert der Drehwinkelsensor 50 ein digitales Ausgangssignal, insbesondere eine Binärzahl, die eine bestimmte Absolutposition bzw. einen bestimmten Absolutdrehwinkel bezeichnet bzw. dazu korrespondiert.

Die Auflösung des Drehwinkelsensors 50 ist vorzugsweise durch die Anzahl an Bits des digitalen Ausgangssignals gegeben bzw. beschränkt. Vorzugsweise hat der Drehwinkelsensor 50 eine Auflösung von mindestens 4 Bit, insbesondere von mindestens 5 Bit oder 6 Bit, bevorzugt von mindestens 9 Bit, besonders bevorzugt von mindestens 12 Bit, und/oder von höchstens 24 Bit, insbesondere von höchstens 16 Bit. Besonders bevorzugt hat der Drehwinkelsensor 50 eine Auflösung von 14 Bit.

Alternativ ist es auch möglich, dass der Drehwinkelsensor 50 ein Inkremental(dreh)geber ist und/oder für eine relative Bestimmung des Drehwinkels und/oder der Position ausgebildet ist. Insbesondere erfasst der Drehwinkelsensor 50 in diesem Fall die Änderung des Drehwinkels bzw. der Position, insbesondere relativ zu der Position beim Einschalten oder zu einer (bekannten) Referenzposition. Im Fall einer Referenzposition fährt das Werkzeug 121 bzw. der Elektromotor 1 vorzugsweise nach dem Einschalten in die Referenzposition, so dass nachfolgend Drehwinkel bzw. Position relativ zur Referenzposition bestimmt werden können.

Der Drehwinkelsensor 50 ist vorzugsweise ein Magnetfeldsensor bzw. dazu ausgebildet, ein Magnetfeld bzw. eine Magnetfeldänderung zu detektieren. Über das Magnetfeld bzw. die Änderung des Magnetfelds kann der Drehwinkel bzw. die Position des Rotors 20 - und somit vorzugsweise zumindest mittelbar auch des Werkzeugs 121 - ermittelt werden.

Besonders bevorzugt ist der Drehwinkelsensor 50 ein magnetoresistiver Sensor, insbesondere ein Hall-basierter Sensor oder TMR-basierter Sensor (tunnel magnetoresistance) bzw. basiert die Drehwinkelmessung auf einem magnetoresistiven Effekt, insbesondere dem Hall-Effekt oder dem magnetischen Tunnelwiderstand bzw. TMR-Effekt. Der Drehwinkelsensor 50 kann mehrere magnetoresistive Elemente, insbesondere mehrere Hall-Elemente und/oder TMR-Elemente, aufweisen.

Vorzugsweise erfasst der Drehwinkelsensor 50 das Magnetfeld eines am Rotor 20, insbesondere der Welle 23, montierten Sensormagneten 24.

Der Sensormagnet 24 ist vorzugsweise ein Neodym-Magnet, besonders bevorzugt ein N35-Magnet.

Der Elektromotor 1, insbesondere die Welle 23, weist vorzugsweise eine Sensormagnet-Halterung 25 zum Halten des Sensormagneten 24 auf.

Der Sensormagnet 24 bzw. die Sensormagnet-Halterung 25 ist vorzugsweise am (axialen) unteren bzw. dem dem Aufsatz 80 oder Werkzeug 121 abgewandten Ende der Welle 23 angeordnet, insbesondere derart, dass der Sensormagnet 24 koaxial zur Welle 23 bzw. Rotationsachse A angeordnet ist. Die Sensormagnet-Halterung 25 ist vorzugsweise auf das Ende der Welle 23 aufgesteckt.

Der Drehwinkelsensor 50 ist vorzugsweise (fest) mit dem Stator 10 verbunden und/oder ortsfest im oder am Elektromotor 1 angeordnet, insbesondere mittels einer Drehwinkelsensor-Halterung 60, bevorzugt an der unteren Lagerbrücke 43.

Beim Darstellungsbeispiel ist der Drehwinkelsensor 50 (axial) unterhalb der Welle 23 bzw. des Sensormagneten 24 bzw. benachbart dazu angeordnet. Insbesondere ist der Drehwinkelsensor benachbart zum unteren bzw. dem Aufsatz 80 oder Werkzeug 121 abgewandten Ende der Welle 23 angeordnet.

Vorzugsweise ist der Drehwinkelsensor 50 koaxial zur Welle 23, zum Sensormagneten 24 bzw. zur Rotationsachse A angeordnet.

Der Abstand zwischen dem Sensormagneten 24 und dem Drehwinkelsensor 50 beträgt vorzugsweise mehr als 0,5 mm, insbesondere mehr als 1 mm, und/oder weniger als 2,5 mm, insbesondere weniger als 2 mm.

Vorzugsweise bilden der Drehwinkelsensor 50 und der Sensormagnet 24 gemeinsam eine Sensoranordnung der Küchenmaschine 100 bzw. des Elektromotors 1. Alternativ kann der Sensormagnet 24 auch als Teil bzw. Komponente des Drehwinkelsensors 50 aufgefasst werden.

Die vorschlagsgemäße Küchenmaschine 100 wird vorzugsweise zum Zubereiten von Lebensmitteln L verwendet.

Das Zubereiten von Lebensmitteln L mit der Küchenmaschine 100 wird vorzugsweise gemäß einem Rezept durchgeführt, wobei das Rezept bevorzugt mehrere Zubereitungsschritte umfasst, die nacheinander ausgeführt werden.

Wie bereits eingangs erwähnt, umfasst oder besteht ein Zubereitungsschritt vorzugsweise aus einer Angabe bezüglich zu verwendender Lebensmittel L bzw. Zutaten, insbesondere bezüglich der Art und Menge, sowie Angaben zu einer damit durchzuführenden Handlung.

Ein Zubereitungsschritt bzw. die im Zubereitungsschritt durchzuführende Handlung umfasst vorzugsweise einen Betrieb des Werkzeugs 121, insbesondere bei einer bestimmten Drehzahl, Drehdauer und/oder Drehrichtung, und/oder einen Betrieb des Heizsystems 122, insbesondere bei einer bestimmten Heiztemperatur und/oder Heizdauer.

Bevorzugt umfasst ein Zubereitungsschritt einen Betrieb des Werkzeugs 121 in der ersten Drehrichtung D1 zum Zerschneiden bzw. Zerkleinern und/oder Vermischen oder Verrühren von Lebensmitteln L. Es ist aber vorzugsweise auch ein Betrieb des Werkzeugs 121 in der zweiten Drehrichtung D2 möglich, insbesondere wenn Lebensmittel L vermischt oder gerührt werden sollen und die Schneiden 121A des Werkzeugs 121 nicht wirken sollen, insbesondere wenn die gerührten Lebensmittel L nicht zerschnitten/zerkleinert werden sollen. Alternativ kann ein Zubereitungsschritt auch einen abwechselnden Betrieb in erster und zweiter Drehrichtung D1, D2 umfassen, insbesondere wenn das Lebensmittel L geknetet werden soll.

Das Rezept liegt vorzugsweise in digitaler Form bzw. einer von der Küchenmaschine 100 interpretierbarer Form vor. Insbesondere ist das Rezept in der Computereinrichtung 114 der Küchenmaschine 100 gespeichert und/oder von einem externen Speicher abrufbar. Bevorzugt umfasst die Küchenmaschine 100 und/oder der externe Speicher eine Rezept-Datenbank mit einer Vielzahl von Rezepten. Ein Benutzer kann vorzugsweise über die Benutzerschnittstelle 113 ein Rezept aus der Rezept-Datenbank auswählen bzw. abrufen bzw. anzeigen lassen.

Die Zubereitungsschritte werden vorzugsweise zumindest teilautomatisch von der Küchenmaschine 100 durchgeführt. Insbesondere muss ein Benutzer die Betriebsparameter des Heizsystems 122 bzw. des Elektromotors 1, insbesondere Drehzahl, Drehdauer und/oder Drehrichtung, nicht selbst einstellen, sondern diese werden automatisch von der Küchenmaschine 100 bzw. der Computereinrichtung 114 bzw. dem Motorregler 70 gemäß den Rezeptvorgaben eingestellt. Nicht automatisch durchführbare Handlungen, wie das Befördern eines bestimmten Lebensmittels L in das Gefäß 120, werden dem Benutzer vorzugsweise über die Benutzerschnittstelle 113 angezeigt.

Es ist aber auch möglich, dass der Benutzer das Rezept manuell ausführt, insbesondere der Küchenmaschine 100 die Drehzahl, Drehdauer und/oder Drehrichtung des Elektromotors 1 bzw. Werkzeugs 121 vorgibt.

Fig. 5 zeigt das Werkzeug 121 in einer schematischen Seitenansicht in einem blockierten Zustand. Das Gefäß 120 ist hierbei durch strich-punktierte Linien angedeutet. Weitere Komponenten, insbesondere der Elektromotor 1, sind zur Übersichtlichkeit weggelassen worden. Insbesondere ist der in Fig. 5 dargestellte Kopplungsabschnitt 121E mit der Welle 23 des Elektromotors 1, insbesondere über den Aufsatz 80 verbunden.

Wie in Fig. 5 dargestellt, kann es vorkommen, dass das Werkzeug 121 bzw. dessen Drehbewegung durch eine Blockade B blockiert ist.

Die Blockade B tritt insbesondere während der Zubereitung bzw. Bearbeitung von Lebensmitteln L auf.

Unter einer Blockade B ist allgemein jedes Objekt oder auch mehrere Objekte zu verstehen, die das Werkzeug 121 daran hindern, sich weiterzudrehen. Eine Blockade B kann beispielsweise entstehen, wenn Lebensmittel L am Gefäßboden 123 festhaften. Insbesondere kann es sich bei einer Blockade B also um am Gefäßboden 123 festhaftende Lebensmittel L handeln. Ein Festhaften an einer seitlichen Gefäßwandung ist ebenfalls denkbar.

Ein Festhaften von Lebensmitteln L kann beim Erhitzen, insbesondere mittels des Heizsystems 122, entstehen, beispielsweise durch ein Festbacken des Lebensmittels L an Gefäßboden 123.

Es kann sich bei einer Blockade B auch um ein oder mehrere Lebensmittel L handeln, die sich im Gefäß 120 verkantet oder verklemmt haben.

Es ist auch möglich, dass die Blockade B das Werkzeug 121 bzw. dessen Bewegung nicht vollständig blockiert, sondern nur deutlich verlangsamt.

Generell übt eine Blockade B auf das Werkzeug 121 eine größere Kraft auf als erwartet, insbesondere so dass das Werkzeug 121 mit der für den Zubereitungsschritt vorgesehenen Motorleistung die Blockade B nicht überwinden kann oder zumindest durch die Blockade B deutlich behindert bzw. verlangsamt wird.

Beim Darstellungsbeispiel liegt das Werkzeug 121 mit einer seiner tieferliegenden Arme 121A, insbesondere mit dessen Schneide 121B, an der Blockade B an. Es ist aber auch möglich, dass das Werkzeug 121, insbesondere mit einer seiner Schneiden 121A, teilweise in der Blockade B steckt. Ferner ist es auch möglich, dass die Blockierung in der zweiten Drehrichtung D2 eintritt, das Werkzeug 121 also mit einem Armrücken 121C an der Blockade B anliegt oder feststeckt. Je nach Ausbildung des Werkzeugs 121 sind auch andere Blockierungen denkbar.

Die dargestellte Blockade B ist nur beispielhaft. Insbesondere kann die Blockade B auch größer als dargestellt sein, beispielsweise so dass auch einer der höherliegenden Arme 121A blockiert sein kann.

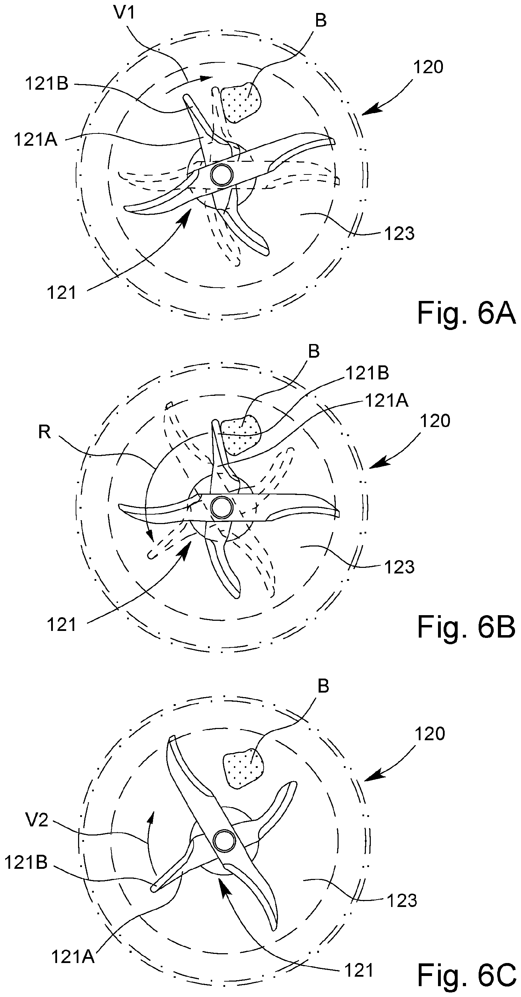

Nachfolgend wird ein bevorzugtes Verfahren zur Behandlung der Blockade B, insbesondere zum Lösen der Blockade B, anhand von Figuren 6A bis 6E näher erläutert.

Die Figuren 6A bis 6E sind jeweils schematische Draufsichten des Werkzeugs 121 im Gefäß 120 in verschiedenen Zuständen bzw. bei verschiedenen Verfahrensschritten. Die seitlichen Gefäßwandungen sind hierbei jeweils durch strichpunktierte Linien dargestellt und der Gefäßboden 123 durch eine gestrichelte Linie. In den Figuren 6A bis 6E sind zur Übersichtlichkeit jeweils nur der in Fig. 5 als blockiert dargestellte Arm 121A und dessen Schneide 121B mit einem Bezugszeichen versehen.

Fig. 6A zeigt das Werkzeug 121 in einem (Normal-)Zustand bzw. Zubereitungszustand bevor es blockiert ist, insbesondere (kurz) vor Erreichen der Blockade B.

Das Werkzeug 121 führt eine Vorwärtsbewegung V1 aus, insbesondere in Drehrichtung D1, beim Darstellungsbeispiel im Uhrzeigersinn bzw. Rechtslauf. Der Elektromotor 1 wird vorzugsweise entsprechend betrieben, insbesondere mittels des Motorreglers 70 gesteuert bzw. geregelt, um die Bewegung V1 zu realisieren.

Die Bewegung V1 des Werkzeugs 121 wird ausgeführt, um ein oder mehrere Lebensmittel L zu bearbeiten, besonders bevorzugt gemäß einem Rezept und/oder in einem Zubereitungsschritt.

Abhängig vom Lebensmittel L, vom Rezept und/oder vom Zubereitungsschritt kann die Bewegung V1 unterschiedlich sein, beispielsweise mit einer hohen Drehzahl zum Zerschneiden/Zerkleinern oder mit einer niedrigen Drehzahl zum Mischen/Rühren. Der Elektromotor 1 wird vorzugsweise mit entsprechenden Motorparameterwerten, insbesondere mit einer entsprechenden Drehzahl, vom Motorregler 70 gesteuert bzw. geregelt.

Wie bereits eingangs erwähnt, sind vorzugsweise Drehzahlen von 10 U/min bis 10.000 U/min, ganz besonders bevorzugt von 1 U/min bis 12.000 U/min oder bis 15.000 U/min, mit dem Elektromotor 1 der vorschlagsgemäßen Küchenmaschine 100 realisierbar. Unter "niedrigen Drehzahlen" sind vorzugsweise ein- bis dreistellige Drehzahlen zu verstehen, insbesondere Drehzahlen unter 1000 U/ min. "Hohe Drehzahlen" sind vorzugsweise fünfstellige Drehzahlen, insbesondere Drehzahlen über 10.000 U/min. Besonders bevorzugt liegt eine "hohe Drehzahl" bereits ab etwa 7000 U/min vor. "Mittlere Drehzahlen" sind die Drehzahlen zwischen den niedrigen und den hohen Drehzahlen, insbesondere zwischen 1000 U/min und 7000 U/min.

Die Drehrichtung D1, D2 der Bewegung V1 kann ebenfalls vom Lebensmittel L, vom Rezept und/oder vom Zubereitungsschritt abhängen. Beim Darstellungsbeispiel erfolgt die Bewegung V1 in der Richtung, in der die Schneiden 121A wirken. Für ein Rühren oder Mischen könnte die Bewegung V1 jedoch auch in der entgegengesetzten Richtung erfolgen.

Ein bei der Vorwärtsbewegung V1 auftretendes Drehmoment ergibt sich vorzugsweise aus der Drehzahl, Eigenschaften des Elektromotors 1 wie seine Trägheit, und/oder weiteren Einflüssen wie einer Kraft, die das Lebensmittel L auf das Werkzeug 121 ausübt, beispielsweise abhängig von der Viskosität des Lebensmittels L. Prinzipiell ist es aber auch möglich, das Drehmoment vorzugeben und den Elektromotor 1 entsprechend zu steuern bzw. zu regeln.

Vorzugsweise ist die Küchenmaschine 100 dazu ausgebildet, das Drehmoment des Elektromotors 1 bzw. Werkzeugs 121 direkt oder indirekt zu bestimmen, insbesondere mittels der Messeinrichtung 115.

Besonders bevorzugt wird das Drehmoment (indirekt) durch eine Strommessung der am Elektromotor 1 anliegenden Ströme bestimmt, insbesondere mittels eines Strommessgeräts der Messeinrichtung 115.

Zwischen den gemessenen Strömen und dem Drehmoment herrscht vorzugsweise eine bekannte Abhängigkeit. Besonders bevorzugt herrscht in den Bereichen, in denen der Elektromotor 1 betrieben wird, eine zumindest im Wesentlichen lineare Abhängigkeit.

Vorzugsweise wird/ist die Küchenmaschine 100 bzw. das Werkzeug 121 bzw. der Elektromotor 1 mit Drehmomenten kleiner als 12 Nm, insbesondere kleiner als 6 Nm, besonders bevorzugt kleiner als 4 Nm, und/oder größer als 0,5 Nm, insbesondere größer als 1 Nm, besonders bevorzugt größer als 1,5 Nm, betrieben/betreibbar.

Fig. 6A zeigt mit gestrichelten Linien den blockierten Zustand des Werkzeugs 121, der bereits im Zusammenhang mit Fig. 5 erläutert wurde. In diesem Zustand ist insbesondere die Vorwärtsbewegung V1 des Werkzeugs 121 durch die Blockade B blockiert.

Vorzugsweise wird die Blockade B bzw. das Blockieren des Werkzeugs 121 automatisch erkannt, insbesondere anhand von Messwerten des Drehwinkelsensors 50 und/oder anhand von Strommessungen.

Die Blockade B bzw. das Blockieren des Werkzeugs 121 wird vorzugsweise erkannt, wenn die, insbesondere basierend auf Messwerten des Drehwinkelsensors 50 ermittelte, Drehzahl einen Drehzahl-Schwellwert unterschreitet und/oder das Drehmoment bzw. die dazu korrespondierende Stromstärke einen Schwellwert überschreitet, besonders bevorzugt für eine vorgegebene Zeitdauer. Alternativ oder zusätzlich wird eine Blockade B vorzugsweise erkannt, wenn das Verhältnis der (ermittelten) Drehzahl des Elektromotors 1 zu einer Soll-Drehzahl einen Drehzahlverhältnis-Schwellwert unterschreitet, besonders bevorzugt für eine vorgegebene Zeitdauer.

Der Drehzahl-Schwellwert zu Erkennung einer Blockade B ist vorzugsweise kleiner als 1000 U/min, insbesondere kleiner als 500, 100 oder 50 U/min, besonders bevorzugt kleiner als 20 U/min, und oder größer als 1 U/min, insbesondere größer als 5 U/min, besonders bevorzugt größer als 9 U/min.

Der Drehmoment-Schwellwert zu Erkennung einer Blockade B ist vorzugsweise kleiner als 6 Nm, insbesondere kleiner als 4 Nm, 3,5 Nm oder 3 Nm, besonders bevorzugt kleiner als 2,5 Nm, und/oder größer als 0,5 Nm, insbesondere größer als 1 Nm, besonders bevorzugt größer als 1,5 Nm.

Der Drehzahlverhältnis-Schwellwert ist vorzugsweise kleiner als 0,4, insbesondere kleiner als 0,3 oder 0,2, besonders bevorzugt kleiner als 0,1, und/oder größer als 0,05, insbesondere größer als 0,1.

Vorzugsweise wird eine Blockade B nur dann automatisch erkannt, wenn von Drehzahlverhältnis-Schwellwert, Drehzahl-Schwellwert und Drehmoment-Schwellwert mindestens zwei, besonders bevorzugt alle drei, über- bzw. unterschritten werden, besonders bevorzugt gleichzeitig für eine vorgegebene Zeitdauer.

Die Zeitdauer, für die einer, mehrere oder alle der Schwellwerte über- bzw. unterschritten sein müssen, bevor eine Blockade B erkannt wird, beträgt vorzugsweise mindestens 0,1 s, insbesondere vorzugsweise mindestens 0,3 s, besonders bevorzugt mindestens 0,5 s, und/oder höchstens 2 s, insbesondere höchstens 1,5 s, besonders bevorzugt höchstens 1 s.

Es ist auch möglich - alternativ oder zusätzlich zu der Drehzahl - direkt den Drehwinkel bzw. die Drehposition des Elektromotors 1 zur Erkennung einer Blockade B zu verwenden, beispielsweise eine Blockade B zu erkennen, wenn sich der Drehwinkel bzw. die Drehposition für eine vorgegebene Zeitdauer nicht oder nicht signifikant ändert.

Vorzugsweise wird das Erkennen einer Blockade B dem Benutzer signalisiert bzw. angezeigt, insbesondere mittels der Benutzerschnittstelle 113, beispielsweise auf einem Bildschirm der Benutzerschnittstelle 113.

Bei Erkennen einer Blockade B wird das Heizsystem 122 vorzugsweise automatisch abgeschaltet oder zumindest dessen Heizleistung reduziert.

Bei Erkennen einer Blockade B werden vorzugsweise automatisch Schritte zur Behandlung, insbesondere zum Lösen, der Blockade B durchgeführt.

Es kann auch vorgesehen sein, dass die Schritte zur Behandlung der Blockade B durch eine Benutzereingabe, insbesondere mittels der Benutzerschnittstelle 113, eingeleitet bzw. gestartet werden.

Fig. 6B verdeutlicht einen ersten Schritt zur Behandlung der Blockade B bzw. ein Zurückdrehen des Werkzeugs 121. Hierbei ist der blockierte Zustand mit durchgezogenen Linien und der zurückgedrehte Zustand mit gestrichelten Linien dargestellt.

In dem in Fig. 6B dargestellten Verfahrensschritt wird das Werkzeug 121 mit einer Rückwärtsbewegung R zurückgedreht, wie mit einem Pfeil angedeutet.

Die Rückwärtsbewegung R erfolgt vorzugsweise in zweiter Drehrichtung D2 bzw. entgegen der Richtung der Vorwärtsbewegung V1.

Der Elektromotor 1 wird vorzugsweise entsprechend betrieben, insbesondere mittels des Motorreglers 70 gesteuert bzw. geregelt, um die Rückwärtsbewegung R zu realisieren. Besonders bevorzugt erfolgt die Steuerung bzw. Regelung basierend auf Messwerten des Drehwinkelsensors 50 und ggf. Messwerten von anderen Messeinrichtungen wie einem Strommessgerät.

Das Zurückdrehen bzw. die Rückwärtsbewegung R erfolgt vorzugsweise gemäß einer vorgegebenen Motordynamik und/oder mit mindestens einem vorgegebenen, (ersten) Motorregelparameterwert, der insbesondere charakteristisch für die Motordynamik ist bzw. die Motordynamik bestimmt oder mitbestimmt.

Bevorzugt ist der erste Motorregelparameterwert eine vorgegebene (Soll-)Drehzahl oder ein dazu korrespondierender Wert wie eine Geschwindigkeit. Mit anderen Worten gibt der erste Motorregelparameterwert die Drehzahl bzw. Geschwindigkeit an, mit der der Elektromotor 1 bzw. das Werkzeug 121 zurückgedreht wird bzw. werden soll. Der Motorregler 70 steuert bzw. regelt den Elektromotor 1 entsprechend.

Vorzugsweise beschleunigt der Elektromotor 1 bzw. das Werkzeug 121, bis es die vorgegebene Drehzahl bzw. Geschwindigkeit erreicht hat und wird dann auf diese Drehzahl geregelt bzw. dreht sich im Wesentlichen konstant mit dieser Drehzahl. Es ist aber auch möglich, dass die Rückwärtsbewegung R gestoppt bzw. beendet wird, bevor die vorgegebene Drehzahl erreicht ist.

Die (Soll-)Drehzahl beträgt vorzugsweise höchstens 120 U/min, insbesondere höchstens 100 U/min, besonders bevorzugt höchstens 70 U/min, und/oder mindestens 5 U/min, insbesondere mindestens 10 U/min, besonders bevorzugt mindestens 30 U/min.

Alternativ kann der erste Motorregelparameterwert ein (Soll-)Drehwinkel bzw. eine (Soll-)Position oder ein dazu korrespondierender Wert sein. Mit anderen Worten gibt der erste Motorregelparameterwert den Winkel bzw. die Position an, bis zu dem/der der Elektromotor 1 bzw. das Werkzeug 121 zurückgedreht wird bzw. werden soll. Der Motorregler 70 steuert bzw. regelt den Elektromotor 1 entsprechend.

Eine Regelung auf den Drehwinkel bzw. die Position führt vorzugsweise dazu, dass die Drehzahl bzw. Geschwindigkeit von der Distanz zum Soll-Drehwinkel abhängt, insbesondere mit sich verringernder Distanz abnimmt.

Der (Soll-)Drehwinkel beträgt vorzugsweise höchstens 360°, insbesondere höchstens 180°, besonders bevorzugt höchstens 130°, und/oder mindestens 10°, insbesondere mindestens 45°, besonders bevorzugt mindestens 90°.

Alternativ kann der erste Motorregelparameterwert ein (Soll-)Drehmoment sein oder ein dazu korrespondierender Wert wie eine Stromstärke sein. Mit anderen Worten gibt der erste Motorregelparameterwert ein zu erreichendes Drehmoment bei der Rückwärtsbewegung R an. Der Motorregler 70 steuert bzw. regelt den Elektromotor 1 entsprechend.

Der erste Motorregelparameterwert ist vorzugsweise herstellerseitig festgelegt. Der erste Motorregelparameterwert kann unabhängig vom Rezept bzw. vom Lebensmittel L festgelegt sein. Besonders bevorzugt hängt der erste Motorparameterwert jedoch vom Rezept bzw. vom Zubereitungsschritt, in dem die Blockade B aufgetreten ist, bzw. von dem oder den Lebensmittel(n) L, die sich im Gefäß 120 befinden, ab.

Es ist jedoch auch möglich, dass der erste Motorregelparameterwert vom Benutzer einstellbar bzw. wählbar ist.

Vorzugsweise ist der erste Motorregelparameterwert eine (Soll-)Drehzahl, die vorzugsweise höchstens 120 U/min, insbesondere höchstens 100 U/min, besonders bevorzugt höchstens 70 U/min, und/oder mindestens 5 U/min, insbesondere mindestens 10 U/min, besonders bevorzugt mindestens 30 U/min, beträgt.

Die Rückwärtsbewegung R wird vorzugsweise durchgeführt, bis eine vorgegebene Stoppbedingung eintritt. Bei bzw. nach Eintritt der Stoppbedingung wird die Rückwärtsbewegung R vorzugsweise beendet bzw. gestoppt. Das Werkzeug 121 befindet sich dann in dem in Fig. 6B gestrichelt dargestellten zurückgedrehten Zustand.

Vorzugsweise wird/werden der Drehwinkel bzw. die Drehposition mittels des Drehwinkelsensors 50 und/oder das Drehmoment bzw. die dazu korrespondierende Stromstärke des Elektromotors 1 und/oder andere Größen überwacht, um zu ermitteln, wann die Stoppbedingung eintritt.

Vorzugsweise tritt die Stoppbedingung ein, wenn ein Stoppwert bei der Rückwärtsbewegung R erreicht oder überschritten, ggf. auch unterschritten, wird.

Bevorzugt ist der Stoppwert eine Stoppzeit oder ein dazu korrespondierender Wert und die Stoppbedingung tritt nach Ablauf der Stoppzeit ein bzw. ist durch den Ablauf der Stoppzeit definiert. Mit anderen Worten erfolgt die Rückwärtsbewegung R bzw. das Zurückdrehen für eine bestimmte, vorgegebene Zeit.

Die Stoppzeit beträgt vorzugsweise höchstens 2 s, insbesondere höchstens 1 s, besonders bevorzugt höchstens 0,5 s, und/oder mindestens 0,05 s, insbesondere mindestens 0,1 s. besonders bevorzugt mindestens 0,2 s.

Alternativ ist der Stoppwert ein Stoppdrehwinkel oder ein dazu korrespondierender Wert und die Stoppbedingung tritt ein, wenn der Drehwinkel den Stoppdrehwinkel erreicht oder überschritten hat. Mit anderen Worten erfolgt die Rückwärtsbewegung R bzw. das Zurückdrehen bis zu einem bestimmten, vorgegebenen Drehwinkel.

Der Stoppdrehwinkel beträgt vorzugsweise höchstens 360°, insbesondere höchstens 180°, besonders bevorzugt höchstens 130°, und/oder mindestens 10°, insbesondere mindestens 45°, besonders bevorzugt mindestens 90°.

Alternativ ist der Stoppwert ein Stoppdrehmoment oder ein dazu korrespondierender Wert und die Stoppbedingung tritt ein, wenn das Drehmoment das Stoppdrehmoment erreicht oder überschritten hat. Mit anderen Worten erfolgt die Rückwärtsbewegung R bzw. das Zurückdrehen bis zu einem bestimmten, vorgegebenen Drehmoment.

Das Stoppdrehmoment beträgt vorzugsweise höchstens 4 Nm, insbesondere höchstens 3,5 Nm, besonders bevorzugt höchstens 2 Nm, und/oder mindestens 0,5 Nm, insbesondere mindestens 1 Nm, besonders bevorzugt etwa 1,5 Nm.

Es ist auch möglich, dass mehrere unterschiedliche Stoppbedingungen vorgegeben sind und die Rückwärtsbewegung R bzw. das Zurückdrehen beendet/gestoppt wird, wenn eine der mehreren Stoppbedingungen erfüllt ist. Beispielsweise könnte sowohl eine Stoppzeit als auch ein Stoppdrehmoment vorgegeben sein und die Rückwärtsbewegung R endet, sobald entweder die Stoppzeit abgelaufen ist oder das Stoppdrehmoment erreicht ist, je nachdem, was früher eintritt.

Zudem ist es auch möglich, dass eine Stoppbedingung mehrere Stoppwerte umfasst und nur dann eintritt, wenn mehrere Stoppwerte erfüllt sind. Beispielsweise könnte sowohl eine Stoppzeit als auch ein Stoppdrehwinkel vorgegeben sein und die Rückwärtsbewegung R endet erst, wenn sowohl die Stoppzeit als auch der Stoppdrehwinkel erreicht wurden.

Eine Stoppbedingung kann auch das Erkennen eines Blockierens des Werkzeugs 121 sein, vorzugsweise wie oben erläutert. In diesem Fall ist das Werkzeug 121 vorzugsweise von der gleichen Blockade B wie zuvor, nun aber in der zweiten Drehrichtung D2 bzw. beim Rückwärtsdrehen blockiert. Es kann sich aber auch um eine andere Blockade handeln.

Die Stoppbedingung(en) ist/sind vorzugsweise herstellerseitig festgelegt. Die Stoppbedingung(en) kann/können unabhängig vom Rezept bzw. vom Lebensmittel L festgelegt sein. Besonders bevorzugt hängt/hängen die Stoppbedingung(en) jedoch vom Rezept bzw. vom Zubereitungsschritt, in dem die Blockade B aufgetreten ist, bzw. von dem oder den Lebensmittel(n) L, die sich im Gefäß 120 befinden, ab.

Es ist jedoch auch möglich, dass die Stoppbedingung(en) vom Benutzer einstellbar bzw. wählbar ist/sind.

Besonders bevorzugt ist es, bei der Rückwärtsbewegung R bzw. beim Zurückdrehen eine Drehzahl als ersten Motorregelparameterwert und eine Stoppzeit vorzugeben. Mit anderen Worten wird der Elektromotor 1 bzw. das Werkzeug 121 für eine bestimmte Zeit unter Vorgabe einer bestimmten (Soll-)Drehzahl zurückgedreht.

Durch Multiplikation der Soll-Drehzahl und der Zeit lässt sich ein (theoretischer) maximaler Drehwinkel errechnen. Der tatsächlich bei der Rückwärtsbewegung R erreichte Drehwinkel ist kleiner, insbesondere da der Elektromotor 1 zunächst noch auf die Soll-Drehzahl beschleunigen muss, also nicht die gesamte Zeit über mit der Soll-Drehzahl betrieben wird. Die Beschleunigung bzw. der tatsächlich erreichte Drehwinkel kann vom Lebensmittel L, insbesondere dessen Viskosität, abhängen.

Ein besonders bevorzugtes Ausführungsbeispiel ist eine Rückwärtsbewegung R mit 70 U/min für 0,3 s. Dies entspricht einem maximalen Drehwinkel von 0,35 Umdrehungen bzw. 126°.

Beim Darstellungsbeispiel liegt der Drehwinkel zwischen 90° und 180°, insbesondere bei etwa 120°. Ein Drehwinkel größer als 90° ist möglich, weil die Arme 121A des Werkzeugs 121 in unterschiedlichen Höhen angeordnet sind. Die zum blockierten Arm 121A um 90° versetzten Arme 121A werden daher im Darstellungsbeispiel nicht von der Blockade B blockiert (vgl. auch Fig. 5). der dem blockierten Arm 121A gegenüberliegende Arm 121A würde jedoch vorzugsweise blockiert werden, so dass beim Darstellungsbeispiel der Drehwinkel nicht 180° überschreiten kann. Die möglichen Drehwinkel hängen jedoch vom Werkzeug 121 ab. Bei einem Werkzeug mit nur einem Arm könnten beispielsweise auch Drehwinkel über 180° beim Zurückdrehen erreicht werden.

Fig. 6C verdeutlicht einen zweiten Schritt zur Behandlung der Blockade B bzw. ein Vorwärtsdrehen V2 des Werkzeugs 121 aus dem in Fig. 6C dargestellten, zurückgedrehten Zustand.

Nachdem das Werkzeug 121 bzw. der Elektromotor 1 die Rückwärtsbewegung R ausgeführt hat, insbesondere nachdem die Stoppbedingung eingetreten ist, wird das Werkzeug 121 bzw. der Elektromotor vorzugsweise vorwärts gedreht bzw. führt eine Vorwärtsbewegung V2 aus, wie mit dem Pfeil angedeutet.

Die Vorwärtsbewegung V2 erfolgt vorzugsweise in erster Drehrichtung D1 bzw. entgegen der Rückwärtsrichtung R.

Der Elektromotor 1 wird vorzugsweise entsprechend betrieben, insbesondere mittels des Motorreglers 70 gesteuert bzw. geregelt, um die Vorwärtsbewegung V2 zu realisieren. Besonders bevorzugt erfolgt die Steuerung bzw. Regelung basierend auf Messwerten des Drehwinkelsensors 50 und ggf. Messwerten von anderen Messeinrichtungen wie einem Strommesser.

Das Vorwärtsdrehen bzw. die Vorwärtsbewegung V2 erfolgt vorzugsweise gemäß einer vorgegebenen Motordynamik und/oder mit mindestens einem vorgegebenen, (zweiten) Motorregelparameterwert, der insbesondere charakteristisch für die Motordynamik ist bzw. die Motordynamik bestimmt oder mitbestimmt.

Bezüglich des zweiten Motorregelparameterwerts gelten vorzugsweise die gleichen Ausführungen wie für den ersten Motorregelparameterwert, insbesondere kann es sich um eine Drehzahl, einen Drehwinkel, ein Drehmoment oder dazu korrespondierende Größen handeln.

Vorzugsweise unterscheidet sich der zweite Motorregelparameterwert vom ersten Motorregelparameterwert betragsmäßig, insbesondere ist der zweite Motorregelparameterwert größer als der erste Motorregelparameterwert.

Besonders bevorzugt ist der zweite Motorregelparameterwert der Wert, gemäß dem der Elektromotor 1 im Normalzustand betrieben wird. Mit anderen Worten wird die Vorwärtsbewegung V2 mit dem gleichen Motorregelparameterwert, insbesondere der gleichen Drehzahl, wie die Vorwärtsbewegung V1 durchgeführt bzw. der Elektromotor 1 entsprechend gesteuert/geregelt.

Es ist aber auch möglich und kann bevorzugt sein, die Drehzahl der Vorwärtsbewegung V2 im Vergleich mit der Drehzahl der Vorwärtsbewegung V1 zu erhöhen.

Das Drehmoment ist vorzugsweise bei der Vorwärtsbewegung V1 bzw. V2 und/oder der Rückwärtsbewegung R begrenzt. Eine Begrenzung bei der Vorwärtsbewegung V1 bzw. V2 ergibt sich beispielsweise durch den Drehmoment-Schwellwert zur Erkennung einer Blockade B. Eine Begrenzung bei der Rückwärtsbewegung R ergibt sich beispielsweise durch das Stoppdrehmoment.

Vorzugsweist ist das Drehmoment bei der Rückwärtsbewegung R stärker begrenzt als bei der Vorwärtsbewegung V1 und/oder V2. Besonders bevorzugt beträgt ist das Drehmoment bei der Rückwärtsbewegung R auf einen Wert begrenzt, der weniger als 90%, insbesondere weniger als 70%, und/oder mehr als 30%, insbesondere mehr als 40%, als der Wert beträgt, auf den das Drehmoment bei der Vorwärtsbewegung V1 und/oder V2 begrenzt ist.

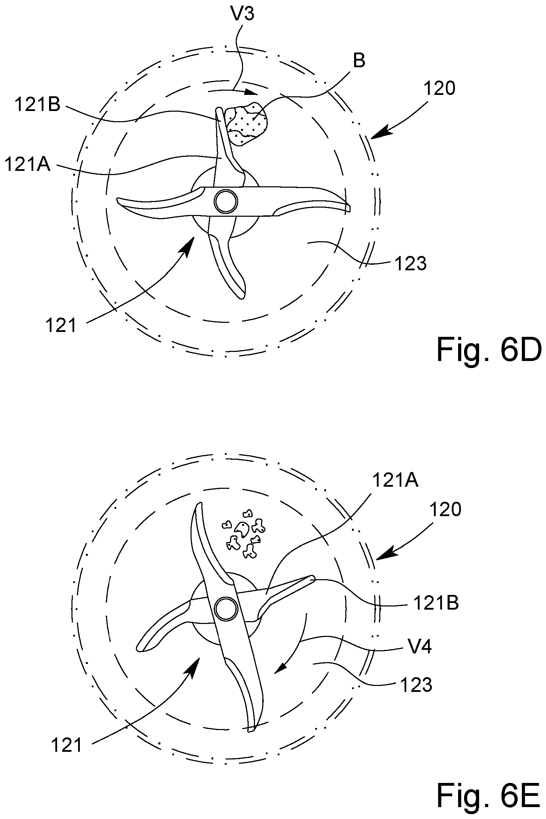

Wenn das Werkzeug 121 bei der Vorwärtsbewegung V2 (erneut) die Blockade B erreicht wird diese vorzugsweise durchbrochen bzw. gelöst. Dies ist in Fig. 6D und Fig. 6E dargestellt.

Fig. 6D zeigt das Werkzeug 121 beim Durchbrechen der Blockade B. Das Werkzeug 121 schlägt bei der Vorwärtsbewegung V2 vorzugsweise gegen die Blockade B. Das Werkzeug 121 ist beim Durchbrechen der Blockade B jedoch nicht von dieser blockiert und führt weiterhin eine Vorwärtsbewegung aus, wie in Fig. 6D mit dem Pfeil V3 dargestellt.

Fig. 6E zeigt das Werkzeug 121 nach dem Durchbrechen der Blockade B. Das Werkzeug 121 bzw. dessen zuvor blockierter Arm 121A befindet sich nun (in erster Drehrichtung D1) hinter der Blockade B. Das Werkzeug 121 führt weiterhin eine Vorwärtsbewegung aus, wie mit dem Pfeil V4 dargestellt. Die Blockade B ist vorzugsweise gelöst, wie schematisch in Fig. 6E dargestellt.

Vorzugsweise wird das Werkzeug 121 bzw. der Elektromotor 1 in Fig. 6E (wieder) im Normalzustand betrieben, insbesondere der Zubereitungsschritt weiter durchgeführt.

Das Heizsystem 122 wird vorzugsweise automatisch angeschaltet bzw. die Heizleistung wieder auf die gemäß Rezept bzw. Zubereitungsschritt vorgegebene Heizleistung erhöht.

Die Abfolge der Figuren 6A bis 6E zeigt das Verfahren, wenn die Blockade B bereits nach einmaligem Zurückdrehen durchbrochen wird. Es ist jedoch möglich, dass das Werkzeug 121 nach der Vorwärtsbewegung V2 erneut von der Blockade B blockiert ist. In diesem Fall wird das Werkzeug 121 vorzugsweise erneut zurückgedreht und anschließend erneut vorwärts gedreht, wie im Zusammenhang mit Fig. 6B und 6C beschrieben.

Vorzugsweise führt der Elektromotor 1 bzw. das Werkzeug 121 eine Rüttelbewegung aus.

Das Zurück- und Vorwärtsdrehen kann so lange erfolgen, bis die Blockade B durchbrochen ist. Es ist jedoch bevorzugt, das Zurück- und Vorwärtsdrehen nur für eine vorgegebene maximale Wiederholungszahl zu wiederholen.

Falls die Blockade B auch nach Durchführung der maximalen Wiederholungszahl nicht durchbrochen bzw. gelöst ist, wird der Elektromotor 1 vorzugsweise abgeschaltet und/oder eine Fehlermeldung über die Benutzerschnittstelle 113 ausgegeben.

Es ist auch möglich, das Zurück- und Vorwärtsdrehen generell für eine vorgegebene, feste Wiederholungszahl zu wiederholen, auch wenn die Blockade B bereits bei einer geringeren Zahl durchbrochen wurde. Auf eine erneute Erkennung der Blockade B nach jedem Vorwärtsdrehen kann dann verzichtet werden.

Die (maximale oder feste) Wiederholungszahl beträgt vorzugsweise mindestens 3, insbesondere mindestens 5, und/oder höchstens 30, insbesondere höchstens 20, besonders bevorzugt höchstens 10.

Bevorzugt wird/werden der erste und/oder zweite Motorregelparameterwert und/oder die Stoppbedingung(en), insbesondere der/die Stoppwert(e), bei den Wiederholungen geändert, insbesondere von Wiederholung zu Wiederholung vergrößert oder verringert, besonders bevorzugt linear.

Vorzugsweise steigt die Frequenz der Rück- und Vorwärtsbewegungen mit der Anzahl der Wiederholungen.

Beispielsweise kann die Stoppzeit und/oder der Stoppdrehwinkel und/oder der als Drehzahl oder Drehwinkel realisierte erste Motorregelparameterwert (sukzessive) vergrößert oder verkleinert werden, so dass sich der Drehwinkel beim Zurückdrehen entsprechend (sukzessive) vergrößert oder verkleinert.

Der zweite Motorregelparameterwert bleibt vorzugsweise bei den Wiederholungen gleich, kann aber ggf. auch verändert werden, beispielsweise als Drehzahl realisiert vergrößert werden, vorzugsweise um schneller gegen die Blockade B zu schlagen.

Auch ist es möglich, bei den Wiederholungen die Begrenzung des Drehmoments zu ändern, insbesondere bei der Vorwärtsbewegung V2 zu erhöhen, vorzugsweise um stärker gegen die Blockade B zu schlagen.

Die (maximale oder feste) Wiederholungszahl und/oder die Werteänderungen bei den Wiederholungen hängt/hängen vorzugsweise vom Rezept bzw. vom Zubereitungsschritt, in dem die Blockade B aufgetreten ist, bzw. von dem oder den Lebensmittel(n) L, die sich im Gefäß 120 befinden, ab.

In einer nicht dargestellten Variante wird die Blockade B in zweiter Drehrichtung D2 bzw. mit dem Rücken 121C des Werkzeugs 121 behandelt. Hierzu wird das Werkzeug 121 zunächst in Rückwärtsbewegung R bewegt, bis es (von der anderen Seite) gegen die Blockade B schlägt. Beim bevorzugten Werkzeug 121 gemäß Darstellungsbeispiel schlägt das Werkzeug 121 vorzugsweise mit dem (stumpfen) Rücken 121C eines der Arme 121A gegen die Blockade B. Insbesondere ist dies der dem anfangs blockierten Arm 121A gegenüberliegende Arm 121A.

Dann erfolgt ein Vorwärts- und Rückwärtsbewegen, so dass der Rücken 121C wiederholt gegen die Blockade B schlägt. Das Vorwärts- und Rückwärtsbewegen erfolgt dabei vorzugsweise im Wesentlichen wie zuvor beschrieben, nur mit umgekehrten Drehrichtungen, ggf. mit sich ändernden Motorregelparameterwerten und/oder Stoppbedingungen.

Es ist auch möglich, das Werkzeug 121 so vorwärts und rückwärts zu bewegen, dass es sowohl bei der Rückwärtsbewegung als auch der Vorwärtsbewegung gegen die Blockade B schlägt.

Wie bereits zuvor erwähnt, hängen die Motorregelparameterwerte, Stoppbedingung(en) und/oder Anzahl der Wiederholungen vorzugsweise vom Rezept, Zubereitungsschritt und/oder Lebensmittel L ab. Entsprechend kann vom Rezept, Zubereitungsschritt und/oder Lebensmittel L auch abhängen, ob das Werkzeug 121 nur vorwärts, nur rückwärts, oder sowohl vorwärts als auch rückwärts gegen die Blockade B gefahren wird.

Durch die Rezept- bzw. Lebensmittelabhängigkeit kann das Verfahren bzw. die Verwendung zum Behandeln der Blockade B an den jeweiligen Zubereitungsschritt bzw. die jeweiligen Lebensmittel L angepasst werden. Vorzugsweise können die Werte entsprechend gewählt werden, um die Blockade B je nach Lebensmittel L mit geringerer oder größerer Kraft zu behandeln.

Handelt es sich bei dem Lebensmittel L beispielsweise um ein Lebensmittel L, das nicht zerschnitten bzw. zerkleinert werden soll, wie Muscheln mit Schale, kann das Verfahren entsprechend mit geringerer Krafteinwirkung und/oder in umgekehrter Drehrichtung (Behandlung mit dem Werkzeugrücken 121C) erfolgen.

Es ist auch möglich, dem Benutzer mehrere Programme zum Behandeln der Blockade B zur Verfügung zu stellen. Der Benutzer kann dann vorzugsweise mittels der Benutzerschnittstelle 113 ein Programm auswählen. Ein Programm ist hierbei ein vorzugsweise herstellerseitig vorgegebener Satz von Motorregelparameterwerten und Stoppbedingung(en) und ggf. weiteren Werten und/oder Anweisungen, um das Verfahren zum Behandeln der Blockade B in einer vorgegebenen Weise, beispielsweise mit größerer oder mit kleinerer Krafteinwirkung auf die Blockade B, auszuführen.

Wie bereits eingangs erwähnt, kann es vorgesehen sein, dass die Küchenmaschine 100 mit unterschiedlichen Gefäßen 120 und/oder unterschiedlichen Werkzeugen 121 betreibbar ist. Insbesondere kann das vorschlagsgemäße Verfahren zum Behandeln einer Blockade B entsprechend bei unterschiedlichen Gefäßen 120 und/oder unterschiedlichen Werkzeugen 121 durchgeführt werden bzw. die Küchenmaschine 100 mit unterschiedlichen Gefäßen 120 und/oder unterschiedlichen Werkzeugen 121 zum Behandeln einer Blockade B verwendet werden.

Bevorzugt hängen der erste Motorregelparameterwert und/oder der zweite Motorregelparameterwert, die Stoppbedingung(en) und/oder die Anzahl der Wiederholungen vom (verwendeten) Gefäß 120 und/oder vom (verwendeten) Werkzeug 121 ab. Entsprechend kann vom Gefäß 120 und/oder vom Werkzeug 121 auch abhängen, ob das Werkzeug 121 nur vorwärts, nur rückwärts, oder sowohl vorwärts als auch rückwärts gegen die Blockade B gefahren wird.

Vorzugsweise wird nach Erkennen des verwendeten Gefäßes 120 und/oder des verwendeten Werkzeugs 121 - was wie eingangs erwähnt automatisch oder durch Benutzereingabe erfolgen kann - bei einer Blockade B das Verfahren entsprechend gerätespezifisch und/oder werkzeugspezifisch durchgeführt, insbesondere mit für das jeweilige Gefäß 120 bzw. Werkzeug 121 vorgegebenen Motorregelparameterwerten, Stoppbedingung(en) und/oder anderen Vorgaben/Anweisungen.

Einzelne Aspekte, Merkmale und/oder Verfahrensschritte der vorliegenden Erfindung können unabhängig, aber auch in beliebiger Kombination realisiert werden.

### Bezugszeichenliste:

- 1: Elektromotor

- 10: Stator
- 11: Spule
- 12: Statorkern
- 12A: Statorblech
- 12B: Statorzahn
- 13: Spulenträger
- 14: Anschlusseinrichtung
- 15: Anschlusshalterung

- 20: Rotor
- 21: Permanentmagnet
- 22: Rotorkern
- 22A: Rotorblech
- 23: Welle
- 24: Sensormagnet
- 25: Sensormagnet-Halterung

- 30: Lüfter
- 31: Fixierelement

- 40: (oberes) Lager
- 41: (unteres) Lager
- 42: (obere) Lagerbrücke
- 43: (untere) Lagerbrücke

- 50: Drehwinkelsensor

- 60: Sensorhalterung

- 70: Motorregler

- 80: Aufsatz

- 100: Küchenmaschine
- 110: Basisstation
- 111: Aufnahme
- 112: Stromversorgung
- 113: Benutzerschnittstelle
- 114: Computereinrichtung
- 115: Messeinrichtung
- 120: Gefäß
- 121: Werkzeug
- 121A: Blatt/Arm
- 121B: Schneide
- 121C: Rücken
- 121D: Werkzeugwelle
- 121E: Kopplungsabschnitt
- 121F: Kopfteil
- 121G: oberer Festlegungsabschnitt
- 121H: unterer Festlegungsabschnitt
- 122: Heizsystem
- 123: Boden/Gefäßboden

- A: Rotationsachse
- B: Blockade
- D1: erste Drehrichtung
- D2: zweite Drehrichtung
- L: Lebensmittel
- R: Rückwärtsbewegung
- V(1-4): Vorwärtsbewegung

## Patentansprüche

1. Verfahren zum Betreiben einer Küchenmaschine (100),
wobei die Küchenmaschine (100) ein Gefäß (120), ein im Gefäß (120) angeordnetes, drehbares Werkzeug (121) und einen mit dem Werkzeug (121) gekoppelten Elektromotor (1) zum Antrieb des Werkzeugs (121) aufweist,
wobei die Küchenmaschine (100) einen Drehwinkelsensor (50) zur Drehwinkelerfassung des Elektromotors (1) und einen Motorregler (70) zur Regelung des Elektromotors (1) aufweist,
wobei ein Drehen des Werkzeugs (121) in einer ersten Drehrichtung (D1) blockiert wird oder ist,
wobei der Motorregler (70) basierend auf vom Drehwinkelsensor (50) erfassten Messwerten und mindestens einem vorgegebenen ersten Motorregelparameterwert den Elektromotor (1) derart steuert oder regelt, dass das Werkzeug (121) in einer der ersten Drehrichtung (D1) entgegengesetzten, zweiten Drehrichtung (D2) zurückgedreht wird, bis eine vorgegebene Stoppbedingung eintritt, und
wobei nach Eintritt der Stoppbedingung der Motorregler (70) basierend auf vom Drehwinkelsensor (50) erfassten Messwerten und mindestens einem vorgegebenen zweiten Motorregelparameterwert den Elektromotor (1) derart steuert oder regelt, dass das Werkzeug (121) in die erste Drehrichtung (D1) gedreht wird.

2. Verfahren nach Anspruch 1, wobei der erste Motorregelparameterwert und/oder der zweite Motorregelparameterwert eine Drehzahl und/oder ein Drehmoment und/oder ein Drehwinkel und/oder ein oder mehrere dazu korrespondierende Werte sind/ist.

3. Verfahren nach Anspruch 1 oder 2, wobei die Stoppbedingung das Erreichen oder Überschreiten eines vorgegebenen Stoppwerts ist oder umfasst, wobei der Stoppwert eine Stoppzeit, ein Stoppdrehwinkel oder ein Stoppdrehmoment oder ein dazu korrespondierender Wert ist, und/oder wobei die Stoppbedingung ein Blockieren des Werkzeugs (121) in der zweiten Drehrichtung (D2) ist oder umfasst.

4. Verfahren nach einem der voranstehenden Ansprüche, wobei der Drehwinkelsensor (50) eine Drehwinkel-Auflösung unter 5°, insbesondere unter 1°, hat, und/oder wobei der Drehwinkelsensor (50) ein Absolutwertgeber und/oder ein magnetbasierter Drehwinkelsensor, insbesondere ein Hall-Sensor oder ein TMR-Sensor, ist.

5. Verfahren nach einem der voranstehenden Ansprüche, wobei das Blockieren des Werkzeugs (121) automatisch von der Küchenmaschine (100) erkannt und das Zurückdrehen in die zweite Drehrichtung (D2) automatisch eingeleitet wird.

6. Verfahren nach einem der voranstehenden Ansprüche, wobei das Blockieren des Werkzeugs (121) automatisch erkannt wird, wenn, bevorzugt für eine bestimmte Zeitdauer, insbesondere für mindestens 0,5 s, mindestens eine, vorzugsweise alle, der folgenden Bedingungen erfüllt ist/sind:
d) der Drehmomentwert oder ein hierzu korrespondierender Wert liegt oberhalb eines bestimmten Drehmoment-Schwellwerts, insbesondere über 2 Nm;
e) der Drehzahlwert oder ein hierzu korrespondierender Wert liegt unterhalb eines bestimmten Drehzahl-Schwellwerts, insbesondere unterhalb 50 U/min;
f) das Verhältnis des Drehzahlwerts zur Soll-Drehzahl liegt unterhalb eines bestimmten Drehzahlverhältnis-Schwellwerts, insbesondere unterhalb 20%.

7. Verfahren nach einem der voranstehenden Ansprüche, wobei das Drehmoment beim Drehen in die zweite Drehrichtung (D2) auf einen Drehmomentwert unterhalb eines Drehmoment-Schwellwerts in erster Drehrichtung (D1) begrenzt wird, insbesondere auf weniger als 85% des Drehmoment-Schwellwerts in erster Drehrichtung (D1).

8. Verfahren nach einem der voranstehenden Ansprüche, wobei das Zurückdrehen in die zweite Drehrichtung (D2) und anschließende Drehen in die erste Drehrichtung (D1) mehrfach wiederholt wird, insbesondere bis das Werkzeug (121) nicht mehr blockiert ist oder bis eine maximale Wiederholungszahl erreicht ist.

9. Verfahren nach Anspruch 8, wobei das Zurückdrehen in die zweite Drehrichtung (D2) und anschließende Drehen in die erste Drehrichtung (D1) mehrfach mit veränderten Motorregelparameterwerten und/oder veränderten Stoppbedingungen wiederholt wird, insbesondere mit steigender Frequenz, steigender Drehzahl, steigendem Drehmoment und/oder steigendem Drehwinkel.

10. Verfahren nach einem der voranstehenden Ansprüche, wobei der erste Motorparameterwert, der zweite Motorparameterwert und/oder die Stoppbedingung automatisch in Abhängigkeit vom Gefäß (120), vom Werkzeug (121), von einem Rezept und/oder von im Gefäß (120) befindlichen Lebensmitteln (L) vorgegeben sind/ist oder werden/wird.

11. Verfahren nach einem der voranstehenden Ansprüche, wobei die Küchenmaschine (100) ein Heizsystem (122) zum Heizen von im Gefäß (120) befindlichen Lebensmitteln (L) aufweist, wobei das Heizsystem (122) abgeschaltet oder zumindest die Heizleistung reduziert wird, wenn ein Blockieren des Werkzeugs (121) erkannt und/oder das Zurückdrehen in die zweite Drehrichtung (D2) eingeleitet wird.

12. Verfahren nach einem der voranstehenden Ansprüche, wobei der Elektromotor (1) ein bürstenloser Gleichstrommotor und/oder Permanentmagnet-Synchronmotor ist, vorzugsweise mit vier bis sechs Polen und/oder 10 bis 16 Statorschlitzen.

13. Küchenmaschine (100) zum Zubereiten von Lebensmitteln (L),
wobei die Küchenmaschine (100) ein Gefäß (120), ein im Gefäß (120) angeordnetes, drehbares Werkzeug (121) und einen mit dem Werkzeug (121) gekoppelten Elektromotor (1) zum Antrieb des Werkzeugs (121) aufweist,
wobei die Küchenmaschine (100) einen Drehwinkelsensor (50) zur Drehwinkelerfassung des Elektromotors (1) und einen Motorregler (70) zur Regelung des Elektromotors (1) aufweist, und
wobei die Küchenmaschine (100) dazu eingerichtet ist, ein Verfahren nach einem der voranstehenden Ansprüche durchzuführen.

14. Computerprogrammprodukt, umfassend Befehle, die bewirken, dass die Küchenmaschine nach Anspruch 13 die Verfahrensschritte nach einem der Ansprüche 1 bis 12 ausführt.

15. Verwendung einer Küchenmaschine (100), insbesondere einer Küchenmaschine gemäß Anspruch 13, zum Behandeln oder Lösen einer Blockade (B) in einem Gefäß (120) der Küchenmaschine (100),
wobei die Küchenmaschine (100) ein im Gefäß (120) angeordnetes, drehbares Werkzeug (121) und einen mit dem Werkzeug (121) gekoppelten Elektromotor (1) zum Antrieb des Werkzeugs (121) aufweist,
wobei bei einer Blockade (B) ein Motorregler (70) basierend auf von einem Drehwinkelsensor (50) erfassten Messwerten und einem oder mehreren vorgegebenen Motorregelparameterwerten den Elektromotor (1) derart steuert oder regelt, dass das Werkzeug (121) zurückgedreht wird, bis eine vorgegebene Stoppbedingung eintritt, und anschließend in Richtung der Blockade (B) vorwärtsgedreht wird.
